# EUROPEAN PATENT APPLICATION

(11) **EP 4 746 333 A1**
(43) Date of publication of application: **20.05.2026**
(21) Application number: 24854508.9
(22) Date of filing: 01.08.2024
(51) Int. Cl.: H04L 5/00, H04W 72/0446, H04W 88/08, H04W 92/04

(54) **APPARATUS, METHOD, AND STORAGE MEDIUM FOR TRANSMITTING UPLINK SIGNAL IN FRONT-HAUL INTERFACE**

(30) Priority: 14.08.2023 KR 20230106452; 04.12.2023 KR 20230173217; 09.01.2024 KR 20240003589; 15.03.2024 KR 20240036276
(71) Applicant: Samsung Electronics Co., Ltd., Suwon-si, Gyeonggi-do 16677 (KR)
(72) Inventor: OH, Jongho, Suwon-si, Gyeonggi-do 16677 (KR); KANG, Hyoseung, Suwon-si, Gyeonggi-do 16677 (KR); KIM, Joonki, Suwon-si, Gyeonggi-do 16677 (KR); KIM, Sangheon, Suwon-si, Gyeonggi-do 16677 (KR); CHOI, Dongwook, Suwon-si, Gyeonggi-do 16677 (KR)
(74) Representative: Gulde & Partner
(86) International application number: PCT/KR2024/095952
(87) International publication number: WO 2025/037957

(57) **Abstract**

An apparatus of a radio unit (RU) may comprise a memory for storing instructions, a transceiver, and at least one processor. The instructions, when executed individually or collectively by the at least one processor, may cause the apparatus to receive, from a distributed unit (DU), a control plane message including a section extension. The section extension may include transmission timing information for an uplink user plane message. The instructions, when executed individually or collectively by the at least one processor, may cause the apparatus to transmit the uplink user plane message to the DU on the basis of the transmission timing information included in the section extension. The transmission timing information may include identifiers of a plurality of transmission symbols for symbols in which uplink data has been received from a user equipment.

## Description

### [Technical Field]

The following descriptions relate to an apparatus, a method, and a storage medium for transmitting an uplink signal in a fronthaul interface.

### [Background Art]

As a transmission capacity increases in a wireless communication system, a function split that functionally splits a base station is being applied. According to the function split, the base station may be split into a distributed unit (DU) and a radio unit (RU). A fronthaul interface is defined for communication between the DU and the RU.

### [Disclosure]

### [Technical Solution]

As described above, a radio unit (RU) may comprise memory comprising one or more storage media storing instructions. The RU may comprise a transceiver. The RU may comprise at least one processor comprising processing circuitry. The instructions, when executed by the at least one processor individually or collectively, may cause the RU to receive, from a distributed unit (DU), a control plane message including a section extension. The section extension may include transmission timing information for an uplink user plane message. The instructions, when executed by the at least one processor individually or collectively, may cause the RU to transmit, to the DU, the uplink user plane message based on the transmission timing information included in the section extension. The transmission timing information may include identifiers of a plurality of transmission symbols for symbols in which uplink data is received from a user equipment (UE).

A distributed unit (DU) may comprise memory comprising one or more storage media storing instructions. The DU may comprise a transceiver. The DU may comprise at least one processor comprising processing circuitry. The instructions, when executed by the at least one processor individually or collectively, may cause the DU to transmit, to a radio unit (RU), a control plane message including a section extension. The section extension may include transmission timing information for an uplink user plane message. The instructions, when executed by the at least one processor individually or collectively, may cause the DU to receive, from the RU, the uplink user plane message based on the transmission timing information included in the section extension. The transmission timing information may include identifiers of a plurality of transmission symbols for symbols in which uplink data is received from a user equipment (UE).

A method performed by a radio unit (RU) may comprise receiving, from a distributed unit (DU), a control plane message including a section extension. The section extension may include transmission timing information for an uplink user plane message. The method may comprise transmitting, to the DU, the uplink user plane message based on the transmission timing information included in the section extension. The transmission timing information may include identifiers of a plurality of transmission symbols for symbols in which uplink data is received from a user equipment (UE).

A computer-readable storage medium may store one or more programs including instructions that, when executed by at least one processor of a radio unit (RU) comprising a transceiver individually or collectively, cause the RU to receive, from a distributed unit (DU), a control plane message including a section extension. The section extension may include transmission timing information for an uplink user plane message. The computer-readable storage medium may store one or more programs including instructions that, when executed by the at least one processor individually or collectively, cause the RU to transmit, to the DU, the uplink user plane message based on the transmission timing information included in the section extension. The transmission timing information may include identifiers of a plurality of transmission symbols for symbols in which uplink data is received from a user equipment (UE).

A method performed by a distributed unit (DU) may comprise transmitting, to a radio unit (RU), a control plane message including a section extension. The section extension may include transmission timing information for an uplink user plane message. The method may comprise receiving, from the RU, the uplink user plane message based on the transmission timing information included in the section extension. The transmission timing information may include identifiers of a plurality of transmission symbols for symbols in which uplink data is received from a user equipment (UE).

A computer-readable storage medium may store one or more programs including instructions that, when executed by at least one processor of a distributed unit (DU) comprising a transceiver individually or collectively, cause the DU to transmit, to a radio unit (RU), a control plane message including a section extension. The section extension may include transmission timing information for an uplink user plane message. The computer-readable storage medium may store one or more programs including instructions that, when executed by the at least one processor individually or collectively, cause the DU to receive, from the RU, the uplink user plane message based on the transmission timing information included in the section extension. The transmission timing information may include identifiers of a plurality of transmission symbols for symbols in which uplink data is received from a user equipment (UE).

### [Description of the Drawings]

FIG. 1 illustrates an example of a wireless communication system.
FIG. 2A illustrates an example of a fronthaul interface.
FIG. 2B illustrates an example of a fronthaul interface of an open-radio access network (O-RAN).
FIG. 3A illustrates an example of a functional configuration of a distributed unit (DU).
FIG. 3B illustrates an example of a functional configuration of a radio unit (RU).
FIG. 4 illustrates an example of a function split between a DU and an RU.
FIG. 5A illustrates an example of a method of processing a demodulation reference signal (DMRS) by an RU in a class A.
FIG. 5B illustrates an example of a method of processing a DMRS by an RU in a class B.
FIG. 6A illustrates an example of a signal flow for a method in which an RU transmits a user plane message to a DU based on a control plane message received from the DU.
FIG. 6B illustrates an example of a user plane message transmitted to by an RU a DU.
FIG. 7A illustrates an example of a section extension indicating a transmission timing of an uplink user plane message.
FIG. 7B illustrates an example of a section extension indicating a transmission timing of an uplink user plane message.
FIG. 7C illustrates an example of a section extension indicating a transmission timing of an uplink user plane message.
FIGS. 8A to 8C illustrate examples of a timing at which an uplink user plane message is transmitted based on a section extension indicating the transmission timing of the uplink user plane message.
FIG. 8D illustrates an example of a section including a plurality of section extensions.
FIG. 9 illustrates an example of an operation flow of a method in which an RU transmits an uplink user plane message based on a section extension indicating a transmission timing of the uplink user plane message.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a packet, a message, a signal, information, or signaling), a term referring to a resource (e.g., a section, a symbol, a slot, a subframe, a radio frame, a subcarrier, a resource element (RE), a resource block (RB), a bandwidth part (BWP), or an occasion), a term for a calculation state (e.g., a step, an operation, a procedure), a term referring to data (e.g., a packet, a message, a user stream, information, a bit, a symbol, a codeword), a term referring to a channel, a term referring to network entities (e.g., a distributed unit (DU), a radio unit (RU), a central unit (CU), a CU-control plane (CP), a CU-user plane (UP), an open radio access network (O-RAN) DU (O-DU), an O-RAN RU (O-RU), an O-RAN CU (O-CU), an O-RAN CU-CP (O-CU-UP), and an O-RAN CU-CP (O-CU-CP)), a term referring to a component of an apparatus, and the like, used in the following descriptions, are exemplified for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP)), these are only examples for explanation. The various embodiments of the present disclosure may be applied to other communication and broadcast systems.

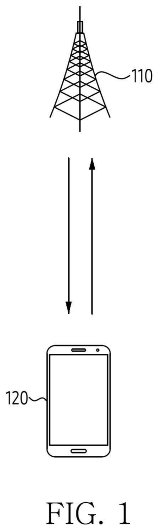

FIG. 1 illustrates an example of a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

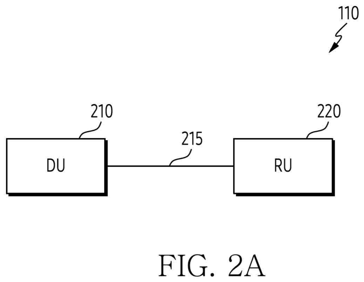

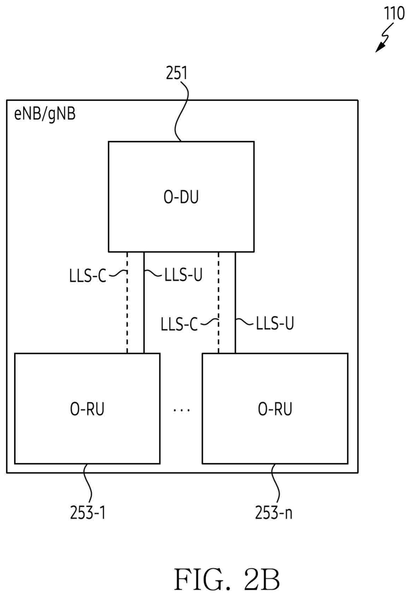

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations becomes smaller, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates an example of a fronthaul interface. Unlike a backhaul between a base station and a core network, the fronthaul refers to a connection between entities between a wireless LAN and a base station.

FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. For example, the digital unit (DU) 210 may be implemented separately into a centralized unit (CU) (or control unit (CU)) and a distributed unit (DU). Between a core (e.g., 5G core (5GC) or next generation core (NGC)) network and a radio access network (RAN), the base station may be implemented in a structure in which centralized unit (CU), distributed unit (DU), and radio unit (RU) are arranged in order. An interface between the centralized unit (CU) and the distributed unit (DU) may be referred to as an F1 interface.

A centralized unit (CU) may be in charge of functions of a higher layer than DU, by being connected to DU. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates an example of an open-radio access network (O-RAN) fronthaul interface. In FIG. 2B, eNB or gNB is exemplified as a base station 110 according to distributed deployment.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

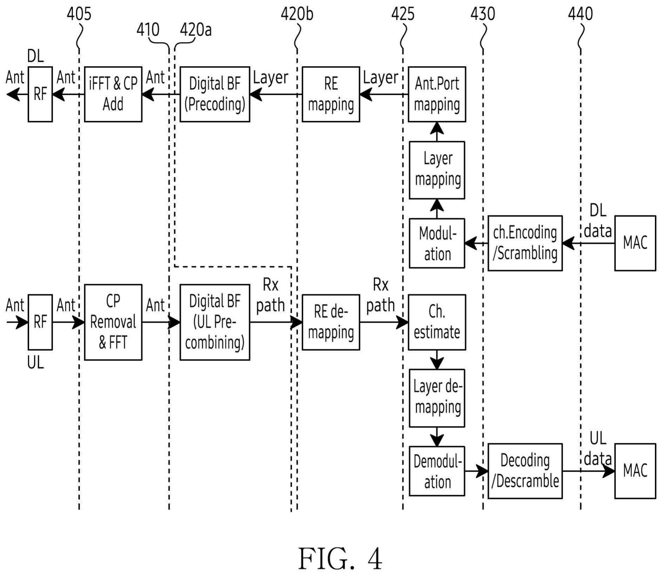

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

In FIG. 2B, entities of the base station 110 have been described as O-DU and O-RU to describe O-RAN. However, these designations are not to be construed as limiting the embodiments of the present disclosure. In embodiments described later, operations of the DU 210 may also be performed by the O-DU 251. A description of the DU 210 may be applied to the O-DU 251. Likewise, in embodiments described later, operations of the RU 220 may also be performed by the O-RU 253-1. A description of the RU 220 may be applied to the O-RU 253-1.

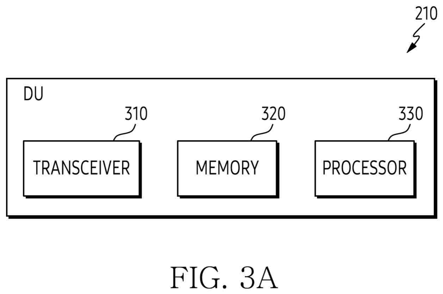

FIG. 3A illustrates an example of a functional configuration of a distributed unit (DU).

A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

For example, the processor 330 may include various processing circuitry and/or a plurality of processors. For example, the term "processor" used in this document, including the claims, may include various processing circuitry including at least one processor, and one or more of the at least one processor may be configured to individually and/or collectively perform various functions described below. As used below, in a case that "processor", "at least one processor", and "one or more processors" are described as being configured to perform various functions, these terms are not limited thereto and encompass situations in which one processor performs a portion of cited functions and another processor (or processors) performs another portion of the cited functions, and also situations in which one processor is capable of performing all of the cited functions. Additionally, the at least one processor may include a combination of processors that, for example, perform various enumerated/disclosed functions in a distributed manner. The at least one processor may execute program instructions to achieve or perform various functions.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

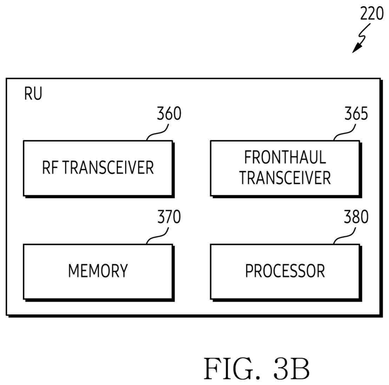

FIG. 3B illustrates an example of a functional configuration of a radio unit (RU).

A configuration exemplified in FIG. 3B, which is as a part of a base station, may be understood as a configuration of the RU 220 of FIG. 2A or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

For example, the processor 380 may include various processing circuitry and/or a plurality of processors. For example, the term "processor" used in this document, including the claims, may include various processing circuitry including at least one processor, and one or more of the at least one processor may be configured to individually and/or collectively perform various functions described below. As used below, in a case that "processor", "at least one processor", and "one or more processors" are described as being configured to perform various functions, these terms are not limited thereto and encompass situations in which one processor performs a portion of cited functions and another processor (or processors) performs another portion of the cited functions, and also situations in which one processor is capable of performing all of the cited functions. Additionally, the at least one processor may include a combination of processors that, for example, perform various enumerated/disclosed functions in a distributed manner. The at least one processor may execute program instructions to achieve or perform various functions.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU according to embodiments.

As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, the RU performs the RF function, and the DU performs the PHY function. The first function split is substantially such that the PHY function is not implemented within the RU, and as an example, it may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.
1) ecpriVersion (4 bits): This parameter indicates an eCPRI protocol version.
2) ecpriReserved (3 bits): This parameter is reserved for further use of eCPRI.
3) ecpriConcatenation (1 bit): This parameter indicates when eCPRI concatenation is in use.
4) ecpriMessage (1 byte): This parameter indicates a type of a service carried by a message type. For example, the parameter indicates an IQ data message, a real-time control data message, or a transport network delay measurement message.
5) ecpriPayload (2 bytes): This parameter indicates a byte size of a payload portion of the eCPRI message.
6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.
7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). The bit allocation of the eAxC ID may be distinguished as follows.
1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.
2) BandSector_ID: Aggregated cell identifier (identification of band and sector supported by O-RU).
3) CC_ID: CC_ID identifies carrier components supported by the O-RU.
4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes of Section Type are as follows.
1) sectionType=0: Used to indicate resource blocks or symbols not used in the DL or the UL.
2) sectionType=1: Used for most DL/UL wireless channels. Herein, "most" refers to channels that do not require time or frequency offsets such as those required for mixed numerology channels.
3) sectionType=2: reserved for further use
4) sectionType=3: PRACH and mixed-numerology channels. Channels that require time or frequency offsets or differ from the nominal SCS value(s).
5) sectionType=4: reserved for further use
6) sectionType=5: UE scheduling information. Transmits UE scheduling information so that the RU can perform real-time BF weight calculation (O-RAN optional BF method)
7) sectionType=6: Transmit UE-specific channel information. Periodically transmits UE channel information so that the RU can perform real-time BF weight calculation (O-RAN optional BF method)
8) sectionType=7: Used for LAA support

Open Radio Access Network (ORAN) is an organization that handles redefining standard fronthaul interfaces between a DU and an RU according to various function split structures, and provides standard interfaces in a split structure to which Ethernet is applied (e.g., a 7-2x function split structure).

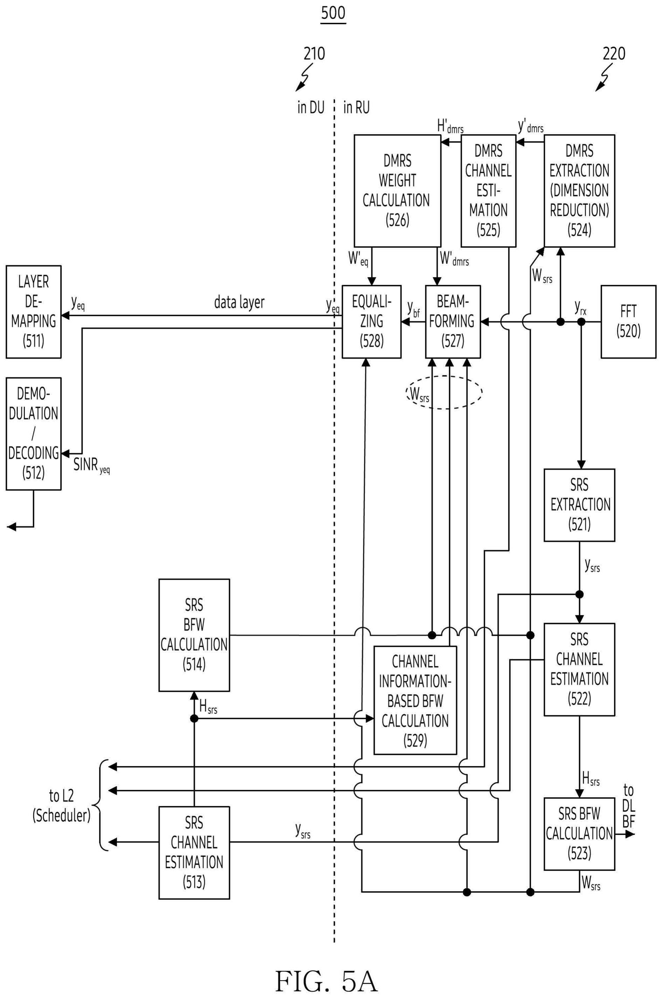

FIG. 5A illustrates an example of a method of processing a demodulation reference signal (DMRS) by an RU in a class A. An RU 220 of FIG. 5A may be an example of the RU 220 of FIG. 2A. A DU 210 of FIG. 5A may be an example of the DU 210 of FIG. 2A.

FIG. 5A illustrates an example 500 of a method in which the RU 220 processes the DMRS in the class A and provides processed information to the DU 210. For example, the class A may represent an example of a function split in which the DMRS processing is performed in the RU 220. The class A may be referred to as uplink performance improvement (ULPI) class A (ULPI class A) or DMRS beamforming-equalizing (DMRS BF-EQ). For example, the DMRS processing may include extraction, channel estimation, and weight calculation for an uplink DMRS.

Referring to the example 500, in a case of using the class A, the RU 220 may perform fast Fourier transform (FFT) 520, sounding reference signal (SRS) extraction 521, SRS channel estimation 522, SRS beamforming weight (BFW) calculation 523, DMRS extraction 524, DMRS channel estimation 525, DMRS weight calculation 526, beamforming 527, equalizing 528, and channel information-based BFW calculation 529. In the example 500, an operation (or a function), such as the FFT 520, the SRS extraction 521, the SRS channel estimation 522, the SRS BFW calculation 523, the DMRS extraction 524, the DMRS channel estimation 525, the DMRS weight calculation 526, the beamforming 527, the equalizing 528, and the channel information-based BFW calculation 529, is illustrated, but the RU 220 may be implemented based on hardware, software, or a combination of hardware and software to perform the operation.

Referring to the example 500, the RU 220 may perform the FFT 520 with respect to an uplink signal received through an uplink channel. For example, the RU 220 may perform the FFT 520 with respect to the uplink signal received from a user equipment 120. The RU 220 may obtain a signal yᵣₓ associated with antenna elements based on the FFT 520. For example, the uplink channel may include a physical uplink shared channel (PUSCH). For example, the uplink signal may include an SRS or a DMRS. The uplink signal may be referred to as uplink data.

For example, the RU 220 may perform the SRS extraction 521 with respect to the signal yᵣₓ. For example, the RU 220 may perform the SRS channel estimation 522 with respect to the an SRS y_{SRS} extracted through the SRS extraction 521. The RU 220 may obtain a channel estimation matrix H_{SRS} based on the SRS channel estimation 522. The RU 220 may perform the SRS BFW calculation 523 based on the channel estimation matrix H_{SRS}. Based on the SRS BFW calculation 523, the RU 220 may obtain a matrix W_{SRS} NxK representing a concatenation of beamforming weight vectors (e.g., N). The K may represent the number of antenna elements of the RU 220.

For example, the RU 220 may perform the DMRS extraction 524 based on the signal yᵣₓ and the matrix W_{SRS}. For example, the RU 220 may obtain a DMRS y'_{dmrs} extracted based on the DMRS extraction 524. While performing the DMRS extraction 524, the RU 220 may also perform dimension reduction. For example, the dimension reduction may be referred to as port reduction, transpose reduction, and transpose dimension reduction. Based on the dimension reduction, an order (or a value) (e.g., K) of a dimension corresponding to the antenna elements of the RU 220 may be reduced. For example, the RU 220 may perform the DMRS channel estimation 525 based on the extracted DMRS y'_{dmrs}. The RU 220 may obtain a channel estimation matrix H_{dmrs} based on the DMRS channel estimation 525. The RU 220 may perform the DMRS weight calculation 526 based on the channel estimation matrix H_{dmrs}. Based on the DMRS weight calculation 526, the RU 220 may obtain a matrix W'_{dmrs} LxK representing a concatenation of beamforming weight vectors L and a matrix W'_{eq} LxL representing a normalization weight matrix of IQ data in each layer.

For example, the RU 220 may perform the beamforming 527. For example, the RU 220 may perform the beamforming 527 with respect to the signal yᵣₓ based on the matrix W_{SRS} and the matrix W'_{dmrs} LxK. The RU 220 may obtain a beamformed signal y_{bf} based on the beamforming 527. At this time, the matrix W_{SRS} may be obtained based on the SRS BFW calculation 523, SRS BFW calculation 514, or the channel information-based BFW calculation 529. For example, the channel information-based BFW calculation 529 may be performed by the RU 220. For example, the SRS BFW calculation 514 may be performed by the DU 210. For example, the RU 220 may perform the equalizing 528 with respect to the signal y_{bf} based on the matrix W'_{eq}. The RU 220 may obtain a signal y_{eq} based on the equalizing 528. For example, the RU 22 may provide (or transmit) the signal y_{eq} to the DU 210. The signal y_{eq} may be referred to as an uplink message. For example, the uplink message may include information on a calculated SINR (SINR_{yeq}).

Referring to the example 500, in a case of using the class A, the DU 210 may perform layer demapping 511, demodulation and decoding 512, SRS channel estimation 513, and the SRS BFW calculation 514. In the example 500, an operation (or a function), such as the layer demapping 511, the demodulation and decoding 512, the SRS channel estimation 513, and the SRS BFW calculation 514, is illustrated, but the DU 210 may be implemented based on hardware, software, or a combination of hardware and software to perform the operation.

Referring to the example 500, the DU 210 may perform the layer demapping 511 based on the signal y_{eq} received (or obtained) from the RU 220. The DU 210 may perform the demodulation and decoding 512 based on a result of the layer demapping 511 and the SINR SINR_{yeq}. In addition, the DU 210 may perform the SRS channel estimation 513 based on the extracted SRS y_{SRS}. The DU 210 may obtain the channel estimation matrix H_{SRS} based on the SRS channel estimation 513. Thereafter, the DU 210 may perform scheduling through a scheduler.

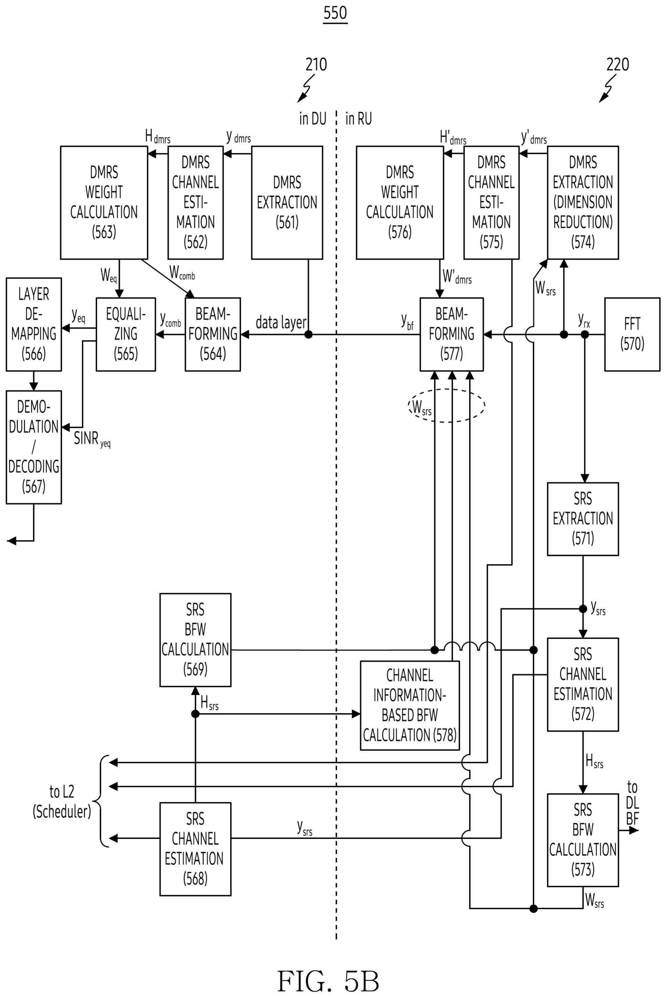

FIG. 5B illustrates an example of a method of processing a DMRS by an RU in a class B. An RU 220 of FIG. 5B may be an example of the RU 220 of FIG. 2A. A DU 210 of FIG. 5B may be an example of the DU 210 of FIG. 2A.

FIG. 5B illustrates an example 550 of a method of providing information in which DMRS processing is performed in the RU 220 and the DU 210 in a class B. For example, the class B may represent an example of a function split in which the DMRS processing is performed in the RU 220 and the DU 210. The class B may be referred to as an uplink performance improvement (ULPI) class B (ULPI class B) or DMRS beamforming-nonequalizing (DMRS BF-NEQ). For example, the DMRS processing may include extraction, channel estimation, and weight calculation for an uplink DMRS.

Referring to the example 550, in a case of using the class B, the RU 220 may perform fast Fourier transform (FFT) 570, sounding reference signal (SRS) extraction 571, SRS channel estimation 572, SRS beamforming weight (BFW) calculation 573, DMRS extraction 574, DMRS channel estimation 575, DMRS weight calculation 576, beamforming 577, and channel information-based BFW calculation 578. In the example 500, an operation (or a function), such as the FFT 570, the SRS extraction 571, the SRS channel estimation 572, the SRS BFW calculation 573, the DMRS extraction 574, the DMRS channel estimation 575, the DMRS weight calculation 576, the beamforming 577, and the channel information-based BFW calculation 578, is illustrated, but the RU 220 may be implemented based on hardware, software, or a combination of hardware and software to perform the operation.

Referring to the example 550, the RU 220 may perform the FFT 570 with respect to an uplink signal received through an uplink channel. For example, the RU 220 may perform the FFT 570 with respect to the uplink signal received from a user equipment 120. The RU 220 may obtain a signal yᵣₓ associated with antenna elements based on the FFT 570. For example, the uplink channel may include a physical uplink shared channel (PUSCH). For example, the uplink signal may include an SRS or a DMRS. The uplink signal may be referred to as uplink data.

For example, the RU 220 may perform the SRS extraction 571 with respect to the signal yᵣₓ. For example, the RU 220 may perform the SRS channel estimation 572 with respect to the an SRS y_{SRS} extracted through the SRS extraction 571. The RU 220 may obtain a channel estimation matrix H_{SRS} based on the SRS channel estimation 572. The RU 220 may perform the SRS BFW calculation 573 based on the channel estimation matrix H_{SRS}. Based on the SRS BFW calculation 573, the RU 220 may obtain a matrix W_{SRS} NxK representing a concatenation of beamforming weight vectors (e.g., N). The K may represent the number of antenna elements of the RU 220.

For example, the RU 220 may perform the DMRS extraction 574 based on the signal yᵣₓ and the matrix W_{SRS}. For example, the RU 220 may obtain a DMRS y'_{dmrs} extracted based on the DMRS extraction 574. While performing the DMRS extraction 574, the RU 220 may also perform dimension reduction. For example, the dimension reduction may be referred to as port reduction, transpose reduction, and transpose dimension reduction. Based on the dimension reduction, an order (or a value) (e.g., K) of a dimension corresponding to the antenna elements of the RU 220 may be reduced. For example, the RU 220 may perform the DMRS channel estimation 575 based on the extracted DMRS y'_{dmrs}. The RU 220 may obtain a channel estimation matrix H_{dmrs} based on the DMRS channel estimation 575. The RU 220 may perform the DMRS weight calculation 576 based on the channel estimation matrix H_{dmrs}. Based on the DMRS weight calculation 576, the RU 220 may obtain a matrix W'_{dmrs} LxK representing a concatenation of beamforming weight vectors L.

For example, the RU 220 may perform the beamforming 577. For example, the RU 220 may perform the beamforming 577 with respect to the signal yᵣₓ based on the matrix W_{SRS} and the matrix W'_{dmrs} LxK. The RU 220 may obtain a beamformed signal y_{bf} based on the beamforming 577. At this time, the matrix W_{SRS} may be obtained based on the SRS BFW calculation 573, SRS BFW calculation 569, or the channel information-based BFW calculation 579. For example, the channel information-based BFW calculation 579 may be performed by the RU 220. For example, the SRS BFW calculation 569 may be performed by the DU 210. For example, the RU 220 may provide (or transmit) the signal y_{bf} to the DU 210. The signal y_{bf} may be referred to as an uplink message. For example, the uplink message may include information on a calculated SINR (SINR_{yeq}).

Referring to the example 550, in a case of using the class B, the DU 210 may perform DMRS extraction 561, DMRS channel estimation 562, DMRS weight calculation 563, combining 564, equalizing 565, layer demapping 566, demodulation and decoding 567, SRS channel estimation 568, and the SRS BFW calculation 569. In the example 550, an operation (or a function), such as the DMRS extraction 561, the DMRS channel estimation 562, the DMRS weight calculation 563, the combining 564, the equalizing 565, the layer demapping 566, the demodulation and decoding 567, the SRS channel estimation 568, and the SRS BFW calculation 569 is illustrated, but the DU 210 may be implemented based on hardware, software, or a combination of hardware and software to perform the operation.

For example, the DU 210 may perform the DMRS extraction 561 based on the signal y_{bf}. For example, the DU 210 may obtain an extracted DMRS y_{dmrs} based on the DMRS extraction 561. For example, the DU 210 may perform the DMRS channel estimation 562 based on the extracted DMRS y_{dmrs}. The DU 210 may obtain the channel estimation matrix H_{dmrs} based on the DMRS channel estimation 562. The DU 210 may perform the DMRS weight calculation 563 based on the channel estimation matrix H_{dmrs}. Based on the DMRS weight calculation 563, the DU 210 may obtain a matrix W_{eq} LxL representing a normalization weight matrix of IQ data and a matrix W'_{comb} Lx(M+N) in which spatial streams M+N are mapped to layers L. For example, the DU 210 may perform the combining 564 with respect to the signal y_{bf} based on the matrix W'_{comb}. The DU 210 may obtain a signal y_{comb} of layer streams M that are not equalized based on the combining 564. For example, the DU 210 may perform the equalizing 565 with respect to the signal y_{comb} based on the matrix W_{eq}. The DU 210 may obtain a signal y_{eq} and the SINR SINR_{yeq} based on the equalizing 565. For example, the DU 210 may perform the layer demapping 566 based on the signal y_{eq}. The DU 210 may perform the demodulation and decoding 567 based on a result of the layer demapping 566 and the SINR SINR_{yeq}. In addition, the DU 210 may perform the SRS channel estimation 568 based on the extracted SRS y_{SRS}. The DU 210 may obtain the channel estimation matrix H_{SRS} based on the SRS channel estimation 568. Thereafter, the DU 210 may perform scheduling through a scheduler.

Referring to FIGS. 5A and 5B, in an uplink signal processing procedure according to the class A and the class B, the RU 220 may perform the DMRS processing. The class A and the class B may be defined for each category of the RU 220. For example, the class A and the class B may be defined with respect to a category A (Cat A) RU 220. In addition, for example, the class A and the class B may be defined with respect to a category B (Cat B) RU 220.

For example, the RU 220 may receive an uplink signal (or uplink data) from a user equipment (e.g., the user equipment 120 of FIG. 1). For example, in a case that the RU 220 receives the uplink signal in a slot, a DMRS included in the uplink signal may be received at a specific position in the slot. For example, the specific position may be a rear portion (e.g., a 12th symbol) based on the slot. In the class A and the class B, the RU 220 may perform channel estimation based on the DMRS and perform processing (e.g., equalizing, or beamforming) with respect to the uplink signal in the slot. Accordingly, the RU 220 may not process the uplink signal received sequentially across symbols in the slot, and needs to wait until the DMRS in the slot to process the uplink signals in the slot. In other words, as the class A and the class B that process the DMRS are used in the RU 220, a delay (or buffering) may occur.

Hereinafter, in the present disclosure, an example of information for ordering (or rearranging) an order of symbols (or symbols in the slot) with respect to the uplink signal received by the RU 220 when transmitting the uplink signal, received by the RU 220, in the slot to the DU 210 will be described. The information for rearranging the order may be referred to as information indicating a transmission timing (or indication information or transmission timing information). An apparatus, a method, and a storage medium according to embodiments of the present disclosure may indicate a timing to transmit an uplink message (e.g., an uplink user plane message) including the uplink signal (or uplink data) received by the RU 220. Accordingly, as the DU 210 may first obtain the DMRS located in the rear portion in the slot and process the uplink signal (or uplink data), uplink performance including processing speed may be improved in terms of a system (or a base station) including the DU 210 and the RU 220.

In the example, the processing speed is described based on the DMRS, but an embodiment of the present disclosure is not limited thereto. For example, in a case of simultaneously receiving an uplink signal from each of a plurality of user equipments in the slot, the RU 220 may provide the DU 210 with an uplink message including an uplink signal for each specific user equipment (or section identifier (section ID)). The DU 210 may perform decoding based on the uplink message sequentially received with respect to each of the plurality of user equipments. Accordingly, as the DU 210 may effectively perform decoding with respect to each user equipment, uplink performance may be improved.

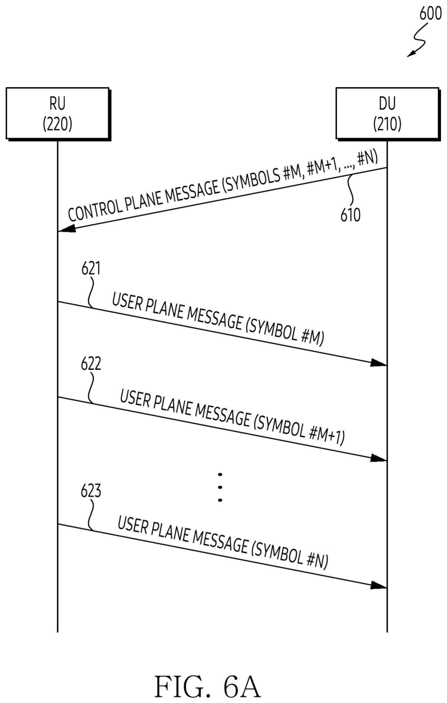

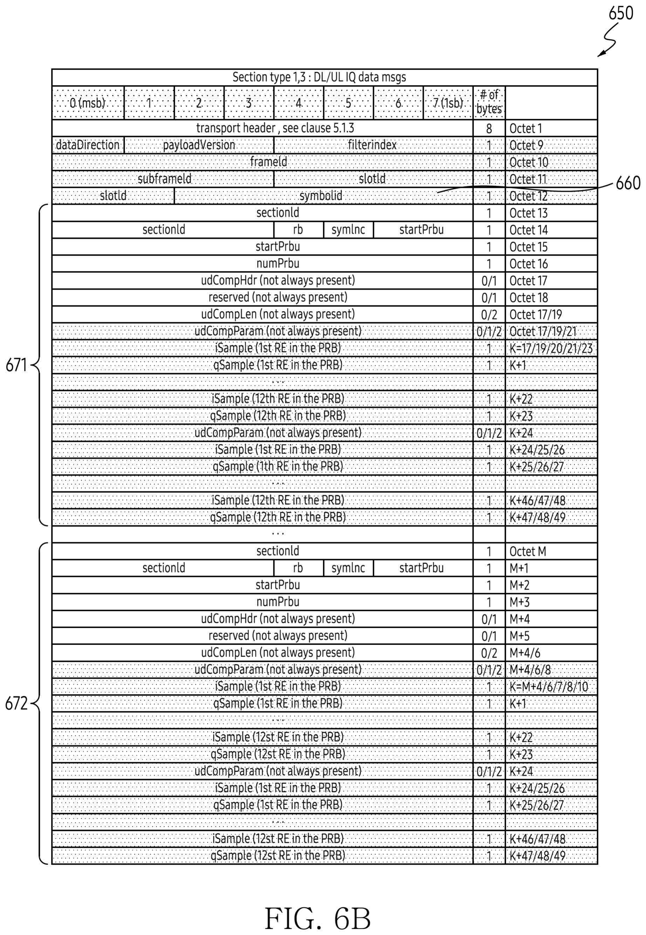

FIG. 6A illustrates an example of a signal flow for a method in which an RU transmits a user plane message to a DU based on a control plane message received from the DU. FIG. 6B illustrates an example of a user plane message transmitted by an RU to a DU. An RU 220 of FIGS. 6A and 6B may be an example of the RU 220 of FIG. 2A. A DU 210 of FIGS. 6A and 6B may be an example of the DU 210 of FIG. 2A. For example, the RU 220 may use the class A or the class B for uplink performance improvement (ULPI).

Referring to FIG. 6A, an example 600 of a method in which the RU 220 transmits a user plane message to the DU 210 based on a control plane message received from the DU 210 is illustrated. For example, the user plane message may be an uplink user plane message transmitted by the RU 220 to the DU 210.

Referring to the example 600, the RU 220 may receive a control plane message 610 from the DU 210. For example, the control plane message 610 may indicate a time resource to be controlled by the control plane message 610. For example, the time resource may be indicated based on a start symbol identifier (id) and information indicating the number of symbols. For example, the starting symbol identifier and the information indicating the number of the symbols may be included in the control plane message 610. For example, the start symbol identifier may be included in common header fields of the control plane message 610. For example, the information indicating the number of the symbols may be included in section fields of the control plane message 610. For example, the section fields may represent a field including a section identifier and a section extension. In the example 600 of FIG. 6A, the control plane message 610 may be used for control of the time resource including a symbol #M, a symbol #M+1, ..., and a symbol #N.

Although not illustrated in the example 600, the RU 220 may receive an uplink signal (or uplink data) from a user equipment (e.g., the user equipment 120 of FIG. 1). For example, the RU 220 may receive the uplink signal in symbols. For example, the symbols may include the symbol #M, the symbol #M+1, ..., and the symbol #N indicated by the control plane message 610. The symbols in which the RU 220 receives the uplink signal from the user equipment 120 may be referred to as an air symbol. For example, the RU 220 may sequentially receive the uplink signal in the symbols. For example, the RU 220 may receive an uplink signal at the symbol #M and then receive an uplink signal at the symbol #M+1.

Referring to the example 600, the RU 220 may transmit a user plane message 621 including the uplink signal received in the symbol #M. For example, the user plane message 621 may be transmitted at a first transmission symbol. In addition, the RU 220 may transmit a user plane message 622 including the uplink signal received at the symbol #M+1. For example, the user plane message 622 may be transmitted at a second transmission symbol consecutive to the first transmission symbol. In addition, the RU 220 may transmit a user plane message 623 including the uplink signal received at the symbol #N. For example, the user plane message 623 may be transmitted at a third transmission symbol following the second transmission symbol. For example, the first transmission symbol, the second transmission symbol, and the third transmission symbol may represent a symbol that the RU 220 transmits to the DU 210 through a fronthaul interface. A specific example of each of the user plane messages 621, 622, and 623 may be referred to FIG. 6B.

FIG. 6B illustrates an example of an uplink user plane message 650 transmitted by the RU 220 to the DU 210. For example, the uplink user plane message 650 may be an example of the user plane messages 621, 622, and 623.

Referring to FIG. 6B, the uplink user plane message 650 may include a symbol identifier 660. For example, the symbol identifier 660 may include identification information of a symbol (or air symbol) in which the RU 220 receives the uplink signal (or uplink data) from the user equipment 120. For example, in a case of the user plane message 621, the symbol identifier 660 may indicate the symbol #M. For example, in a case of the user plane message 622, the symbol identifier 660 may indicate the symbol #M+1. For example, in a case of the user plane message 623, the symbol identifier 660 may indicate the symbol #N.

Referring to FIG. 6B, the uplink user plane message 650 may include information 671 and 672 on an uplink signal (or uplink data) for each section. For example, the uplink user plane message 650 may include the information 671 and 672 on an uplink signal received from a symbol indicated by the symbol identifier 660. For example, the information 671 and 672 on the uplink signal may be distinguished by a section identifier (id). For example, the uplink user plane message 650 may include the information 671 on an uplink signal having a first section identifier and the information 672 on an uplink signal having a second section identifier. In FIG. 6B, an example of the uplink user plane message 650 including two information 671 and 672 is illustrated, but an embodiment of the present disclosure is not limited thereto. Each of the first section identifier and the second section identifier may be referred to as a user equipment (or a user equipment identifier). In other words, the uplink user plane message 650 may include the information 671 having the first section identifier provided from a first user equipment and the information 672 having the second section identifier provided by a second user equipment at a symbol indicated by the symbol identifier 660.

Referring to FIG. 6B, the information 671 and 672 may include IQ data (or IQ samples). For example, the IQ data may represent a frequency domain of an uplink signal received at the symbol indicated by the symbol identifier 660. For example, the IQ data may be defined as a resource element (RE) (or an RE of a physical resource block (PRB)).

Referring to FIGS. 6A and 6B, the RU 220 may sequentially receive an uplink signal for each symbol across symbols (or air symbols) from the user equipment 120. Thereafter, the RU 220 may process the uplink signal received across the symbols and then transmit an uplink user plane message to the DU 210 in a received order (i.e., for each symbol). At this time, the uplink user plane message may be transmitted for each symbol.

Referring to the above description, the RU 220 using the class A and the class B may identify a DMRS of a portion (e.g., a rear portion) of the symbols receiving an uplink signal from the user equipment 120 and may perform processing (e.g., equalizing or beamforming) with respect to the symbols based on the identified DMRS. Thereafter, the RU 220 may sequentially generate an uplink user plane message with respect to the processed symbols and transmit it to the DU 210. At this time, the RU 220 may reorder (or allocate, change, dispose, distribute, or map) an order of the processed symbols by using a delay (or buffering) generated for the processing, other than sequentially generating the processed symbols as the uplink user plane message. Through the uplink user plane message having the reordered order, the DU 210 may effectively decode an uplink signal with respect to the symbols by receiving the DMRS first, or effectively decode an uplink signal for each specific user equipment (or specific section id). Hereinafter, a section extension indicating the reordered order (or a transmission timing) and the uplink user plane message transmitted accordingly will be described.

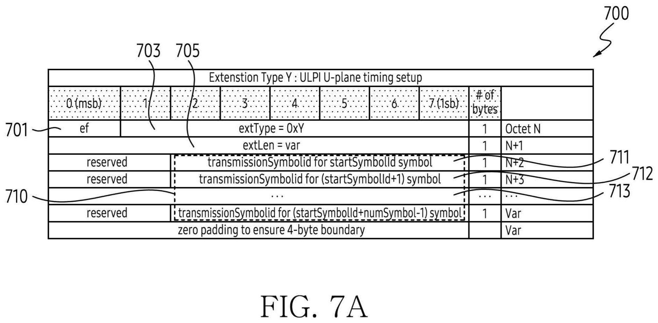

FIG. 7A illustrates an example of a section extension indicating a transmission timing of an uplink user plane message.

FIG. 7A illustrates an example of a section extension 700 indicating a transmission timing of the uplink user plane message. For example, the section extension 700 may be referred to as a section extension to indicate the transmission timing of the uplink user plane message for ULPI. For example, an RU 220 may be associated with a class A or a class B. For example, the transmission timing may represent a timing (or a transmission symbol) at which the RU 220 may transmit the uplink user plane message for each of symbols (or air symbols) receiving an uplink signal (or uplink data) from a user equipment (e.g., the user equipment 120 of FIG. 1).

Referring to FIG. 7A, the section extension 700 may include information indicating the transmission timing of the uplink user plane message for the symbols (or air symbols) in which the uplink signal received from the user equipment 120 is received. The section extension 700 may be referred to as extension type information or an extension type.

According to an embodiment, the section extension 700 may be included in a control plane message. For example, the section extension 700 may be included in the control plane message including a specific section type. For example, the specific section type may include a section type 5. Alternatively, for example, the specific section type may include a section type X for ULPI. The section type X may represent an arbitrary section type number. In other words, the section extension 700 may be used (or associated) in connection with the specific section type. For example, the section extension 700 may be included in section fields of the control plane message. For example, the section fields may include at least one section identifier and at least one section extension.

According to an embodiment, the section extension 700 may include a common parameter. For example, the common parameter may include an extension flag (ef) 701, an extension type (extType) 703, and an extension length (extLen) 705.

For example, the ef 701 may be used to indicate whether another section extension following the section extension 700 exists. For example, the ef 701 may have a field length of 1 bit. For example, in a case that a value of the ef 701 is 1, the another section extension may exist. Conversely, in a case that the value of the ef 701 is 0, the another section extension may not exist. The ef 701 may be referred to as an extension flag.

For example, the extType 703 may be used to indicate the section extension 700. For example, the extType 703 may provide a section extension that provides additional parameters specific to a subject data extension. For example, the extType 703 may have a field length of 7 bits. For example, the extType 703 may have different values for each section extension. For example, the extType 703 of the section extension 700 for the DMRS processing may include 0xY. The Y may represent an arbitrary order or number. The Y may represent a number having two or more digits (e.g., 25). The section extension 700 in which the extType 703 is the Y may be referred to as a section extension Y. The extType 703 may be referred to as an index of section extension information.

For example, the extLen 705 may provide a length of the section extension 700. For example, the extLen 705 may provide the length of the section extension 700 in units of 32bits (or 4 bytes) word. For example, the extLen 705 may have a field length of 8 bits. However, an embodiment of the present disclosure is not limited thereto. For example, according to information included in the section extension 700, the extLen 705 may have a field length of 17 bits or more. The extLen 705 may be referred to as a length of the section extension information. For example, the section extension 700 may have a length of 8 bytes indicated by the extLen 705.

According to an embodiment, the section extension 700 may include transmission timing information 710. For example, the transmission timing information 710 may indicate a plurality of transmission symbols included in the transmission timing of the uplink user plane message. For example, the transmission timing information 710 may include identifiers 711, 712, and 713 of the plurality of transmission symbols for symbols (or air symbols) in which uplink data of the uplink user plane message is received.

For example, the number of identifiers 711, 712, and 713 included in the transmission timing information 710 may be determined based on time information of a control plane message to control transmission of the uplink user plane message. For example, the number of identifiers 711, 712, and 713 may correspond to information indicating the number of symbols included in the time information of the control plane message. For example, a maximum value of the number of identifiers 711, 712, and 713 may correspond to the number of symbols included in a slot. For example, the maximum value may be 14. In other words, the section extension 700 may be set in units of one slot.

For example, among the identifiers 711, 712, and 713 of the transmission timing information 710, the identifier 711 may include an identifier of a transmission symbol for an air symbol having a start symbol identifier (e.g., startSymbolid) of the time information. For example, the identifier 712 may include an identifier of a transmission symbol for an air symbol having a symbol identifier (e.g., startSymbolid+1) following the start symbol identifier. The air symbol having the symbol identifier (e.g., startSymbolid+1) may be continuous to the air symbol having the start symbol identifier (e.g., startSymbolid). For example, the identifier 713 may include an identifier of a transmission symbol for a air symbol having a symbol identifier (e.g., startSymbolid+numSymbol-1). For example, the symbol identifier (e.g., startSymbolid+numSymbol-1) may be determined based on the starting symbol identifier and information indicating the number of the symbols. For example, each of the identifiers 711, 712, and 713 may have a length of 6 bits.

According to an embodiment, the transmission timing information 710 of the section extension 700 may be set based on a fronthaul bandwidth. For example, the identifiers 711, 712, and 713 in the transmission timing information 710 may be prioritized based on the fronthaul bandwidth. For example, a resource defined by the fronthaul bandwidth and a transmission symbol may represent a capacity of a fronthaul (e.g., the fronthaul 215 of FIG. 2A). For example, a priority of each of the identifiers 711, 712, and 713 may be set based on the capacity. For example, among symbols (or air symbols) of an uplink signal (or uplink data) that the RU 220 receives from the user equipment 120, a symbol of a specific signal may be set high in priority. For example, the specific signal may include at least one of a DMRS, ACK information, a physical uplink channel (PUCCH), or uplink control information (UCI) of the uplink signal. For example, an identifier of the transmission timing information 710 for the symbol of the specific signal may indicate the fastest transmission symbol among transmission symbols of the transmission timing.

According to an embodiment, the section extension 700 may be set for each section. For example, the control plane message may include the section extension 700 for a section identifier (id). For example, in a case that the control plane message includes a section (or a section type) having a first section identifier and a section (or a section type) having a second section identifier, the control plane message may include the section extension 700 for the first section identifier and the section extension 700 for the second section identifier, respectively. For example, the section having the first section identifier may be the same as or different from the section having the second section identifier. For example, in a case that the section having the first section identifier is the section type 5, the section having the second section identifier may be the section type 5 or the section type X for ULPI.

According to an embodiment, in a case that the control plane message including the section extension 700 is newly defined, a new definition of an endpoint of the section extension may be required. As described above, a supportable section extension may be defined through a user plane configuration module (or YANG module) of a management plane. The module may define the supportable section extension as follows.

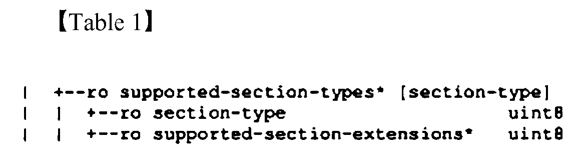

Referring to the above-described table, the value (uint8) of the section-type may indicate 5 (i.e., the section type 5) or X (i.e., the section type X) in association with the control plane message. Also, the value (uint8) of the supported-section-extensions may indicate Y. For example, the Y may represent the section extension 700.

According to an embodiment, the RU 220 may transmit a management plane message to a DU 210. For example, the management plane message may include capability information of the RU 220. The RU 220 may report the capability information of the RU 220 through the management plane message. For example, the capability information may include whether to support a function of setting up a transmission timing of a user plane message (or the uplink user plane message) for ULPI. For example, an example of the capability information may be referenced in the table below.

**[Table 2]**

| | |
|---|---|
| • | module: o-ran-module-cap |
| • | +--rw module-capability |
| • | +--ro ru-capabilities |
| • | \| +--ro ru-supported-U-plane-timing-setup? Enumeration |
| • | \| +--ro max-number-of-advanced-symbols? Uint8 |

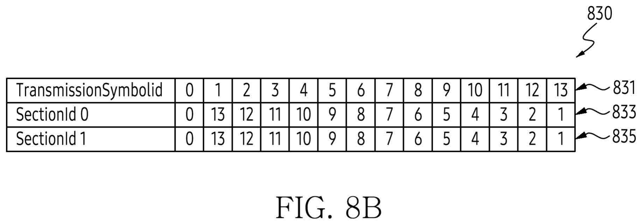

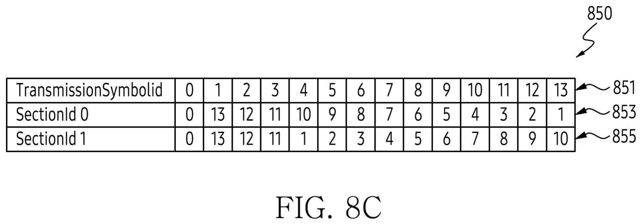

Referring to the above-described table, the ru-supported-U-plane-timing-setup may indicate whether the RU 220 supports a function of reordering (or allocating, changing, disposing, distributing, mapping) air symbols received based on the section extension 700 and transmitting them through indicated transmission symbols. For example, the ru-supported-U-plane-timing-setup may have one of a first value indicating that the function is supported, a second value indicating that the function is not supported, or a third value indicating that the function is conditionally supported. In the example, a case that the value of the ru-supported-U-plane-timing-setup has the three values is described, but embodiments of the present disclosure are not limited thereto. For example, the value of the ru-supported-U-plane-timing-setup may have four values. At this time, a fourth value indicating that the function is conditionally supported may be further included. For example, the third value may indicate that the function may be limitedly supported only in a case that the same transmission symbol identifier (transmissionSymbolid) is not supported in a section (or a user equipment). For example, the fourth value may indicate that the function may be limitedly supported only in a case that the same transmission symbol identifier (transmissionSymbolid) is not supported in a section (or a user equipment) and in a case of having a pattern of one transmission symbol identifier per slot. An example of a timing (or a transmission symbol) at which an uplink user plane message is transmitted through the section extension 700 set based on the third value will be described in detail in FIG. 8C below. An example of a timing (or a transmission symbol) at which an uplink user plane message is transmitted through the section extension 700 set based on the fourth value will be described in detail in FIG. 8B below.

Referring to the above-described table, the max-number-of-advanced-symbols may indicate the maximum number of advanced symbols. For example, the max-number-of-advanced-symbols may be included (or reported) in a case that the ru-supported-U-plane-timing-setup has the first value, the third value, or the fourth value. In other words, the max-number-of-advanced-symbols may be provided to the DU 210 in a case that the RU 220 supports the function. For example, the maximum number of the advanced symbols may be determined based on a capacity (or a maximum capacity) of a buffer (or memory) of the RU 220.

For example, the advanced symbol may indicate a maximum value with respect to the number of transmission symbols between a transmission symbol in a slot corresponding to an air symbol among air symbols in which an uplink signal (or uplink data) is received, and another transmission symbol in the slot to be changed based on the transmission timing information 710 of the section extension 700 (or one identifier among the identifiers 711, 712, and 713 in the transmission timing information 710). For example, the number of transmission symbols between a first transmission symbol (e.g., a symbol #13) in the slot (e.g., a symbol #0 to the symbol #13) corresponding to a first air symbol among the air symbols, and a second transmission symbol (e.g., a symbol #1) in the slot (e.g., the symbol #0 to the symbol #13) to be changed based on the transmission timing information 710 (or the identifier 711 of the transmission timing information 710) may be 12. The number of transmission symbols between a third transmission symbol (e.g., a symbol #10) in the slot (e.g., the symbol #0 to the symbol #13) corresponding to a second air symbol among the air symbols, and a fourth transmission symbol (e.g., the symbol #3) in the slot (e.g., the symbol #0 to the symbol #13) to be changed based on the transmission timing information 710 (or the identifier 712 of the transmission timing information 710) may be 7. In the example, the maximum number that the RU 220 may support may be 12.

Alternatively, for example, the capability information may include whether a class (e.g., the class A or the class B) for supporting ULPI of the RU 220 is supported and whether the function of setting up the transmission timing of the user plane message (or the uplink user plane message) for the ULPI is supported. For example, an example of the capability information may be referenced in the table below.

**[Table 3]**

| | |
|---|---|
| • | module: o-ran-module-cap |
| • | +--rw module-capability |
| • | +--ro ru-capabilities |
| • | \| +--ro ru-supported-category? Enumeration |
| • | \| +--ro ru-supported-classes? [class-type] |
| • | \| \| +--ro class-type? Enumeration |
| • | \| \| +--ro ru-supported-U-plane-timing-setup? Enumeration |
| • | \| \| \| +--ro max-number-of-advanced-symbols? Uint8 |

Referring to the above-described table, the ru-supported-U-plane-timing-setup and the max-number-of-advanced-symbols may be provided together with the capability information (e.g., the ru-supported-classes and the class-type) indicating whether the class (e.g., the class A or the class B) for supporting the ULPI of the RU 220 is supported. The ru-supported-U-plane-timing-setup and the max-number-of-advanced-symbols may be applied in substantially the same manner as the contents of Table 2 described above. The section extension 700 of FIG. 7A is merely exemplary, and an embodiment of the present disclosure is not limited thereto. For example, a position and a length of parameters in the section extension 700 may be changed.

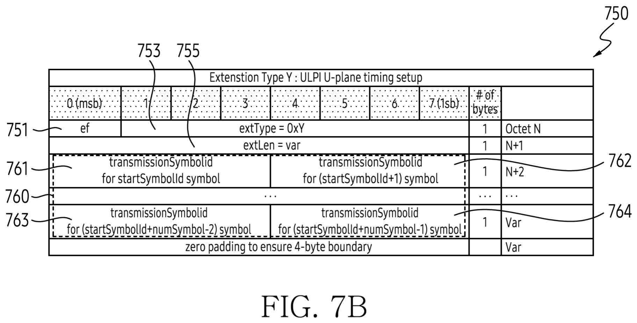

FIG. 7B illustrates an example of a section extension indicating a transmission timing of an uplink user plane message.

FIG. 7B illustrates an example of a section extension 750 indicating a transmission timing of the uplink user plane message. For example, the section extension 750 may be referred to as a section extension to indicate the transmission timing of the uplink user plane message for ULPI. For example, an RU 220 may be associated with a class A or a class B. For example, the transmission timing may represent a timing (or a transmission symbol) at which the RU 220 may transmit the uplink user plane message for each of symbols (or air symbols) receiving an uplink signal (or uplink data) from a user equipment (e.g., the user equipment 120 of FIG. 1).

Referring to FIG. 7B, the section extension 750 may include information indicating the transmission timing of the uplink user plane message for symbols (or air symbols) in which the uplink signal received from the user equipment 120 is received. The section extension 750 may be referred to as extension type information or an extension type.

According to an embodiment, the section extension 750 may be included in a control plane message. For example, the section extension 750 may be included in the control plane message including a specific section type. For example, the specific section type may include a section type 5. Alternatively, for example, the specific section type may include a section type X for ULPI. The section type X may represent an arbitrary section type number. In other words, the section extension 750 may be used (or associated) in connection with the specific section type. For example, the section extension 750 may be included in section fields of the control plane message. For example, the section fields may include at least one section identifier and at least one section extension.

According to an embodiment, the section extension 750 may include a common parameter. For example, the common parameter may include an extension flag (ef) 751, an extension type (extType) 753, and an extension length (extLen) 755.

For example, the ef 751 may be used to indicate whether another section extension following the section extension 750 exists. For example, the ef 751 may have a field length of 1 bit. For example, in a case that a value of the ef 751 is 1, the another section extension may exist. Conversely, in a case that the value of the ef 751 is 0, the another section extension may not exist. The ef 751 may be referred to as an extension flag.

For example, the extType 753 may be used to indicate the section extension 750. For example, the extType 753 may provide a section extension that provides additional parameters specific to a subject data extension. For example, the extType 753 may have a field length of 7 bits. For example, the extType 753 may have different values for each section extension. For example, the extType 753 of the section extension 750 for the DMRS processing may include 0xY. The Y may represent an arbitrary order or number. The Y may represent a number having two or more digits (e.g., 25). The section extension 750 in which the extType 753 is the Y may be referred to as a section extension Y. The extType 753 may be referred to as an index of section extension information.

For example, the extLen 755 may provide a length of the section extension 750. For example, the extLen 755 may provide the length of the section extension 750 in units of 32bits (or 4 bytes) word. For example, the extLen 755 may have a field length of 8 bits. However, an embodiment of the present disclosure is not limited thereto. For example, according to information included in the section extension 750, the extLen 755 may have a field length of 17 bits or more. The extLen 755 may be referred to as a length of the section extension information. For example, the section extension 750 may have a length of 8 bytes indicated by the extLen 755.

According to an embodiment, the section extension 750 may include transmission timing information 760. For example, the transmission timing information 760 may indicate a plurality of transmission symbols included in the transmission timing of the uplink user plane message. For example, the transmission timing information 760 may include identifiers 761, 762, 763, and 764 of the plurality of transmission symbols for symbols (or air symbols) in which uplink data of the uplink user plane message is received.

For example, the number of identifiers 761, 762, 763, and 764 included in the transmission timing information 760 may be determined based on time information of a control plane message to control transmission of the uplink user plane message. For example, the number of identifiers 761, 762, 763, and 764 may correspond to information indicating the number of symbols included in the time information of the control plane message. For example, a maximum value of the number of identifiers 761, 762, 763, and 764 may correspond to the number of symbols included in a slot. For example, the maximum value may be 14. In other words, the section extension 750 may be set in units of single slot.

For example, among the identifiers 761, 762, 763, and 764 of the transmission timing information 760, the identifier 761 may include an identifier of a transmission symbol for an air symbol having a start symbol identifier (e.g., startSymbolid) of the time information. For example, the identifier 762 may include an identifier of a transmission symbol for an air symbol having a symbol identifier (e.g., startSymbolid+1) following the start symbol identifier. The air symbol having the symbol identifier (e.g., startSymbolid+1) may be continuous to the air symbol having the start symbol identifier (e.g., startSymbolid). For example, the identifier 763 may include an identifier of a transmission symbol for an air symbol having a symbol identifier (e.g., startSymbolid+numSymbol-2). For example, the identifier 764 may include an identifier of a transmission symbol for an air symbol having a symbol identifier (e.g., startSymbolid+numSymbol-1). The air symbol having the symbol identifier (e.g., startSymbolid+numSymbol-1) may be continuous to the air symbol having the start symbol identifier (e.g., startSymbolid+numSymbol-2). For example, the symbol identifier (e.g., startSymbolid+numSymbol-1) may be determined based on the starting symbol identifier and information indicating the number of the symbols. Unlike the section extension 700 illustrated in the example of FIG. 7A, each of the identifiers 761, 762, 763, and 764 of the section extension 750 illustrated in the example of FIG. 7B may have a length of 4 bits. Since a size of each of the identifiers 761, 762, 763, and 764 included in the section extension 750 of FIG. 7B is 4 bits and is smaller than 6 bits, which is a size of each of the identifiers 711, 712, and 713 included in the section extension 700 of FIG. 7A, a size of the section extension 750 of FIG. 7B may be smaller than a size of the section extension 700 of FIG. 7A. However, the present disclosure is not limited thereto. For example, by padding bits of the section extension 750, the section extension 750 may be formed in the same size as the section extension 700.

According to an embodiment, the transmission timing information 760 of the section extension 750 may be set based on a fronthaul bandwidth. For example, the identifiers 761, 762, 763, and 764 in the transmission timing information 760 may be prioritized based on the fronthaul bandwidth. For example, a resource defined by the fronthaul bandwidth and a transmission symbol may represent a capacity of a fronthaul (e.g., the fronthaul 215 of FIG. 2A). For example, a priority of each of the identifiers 761, 762, 763, and 764 may be set based on the capacity. For example, among symbols (or air symbols) of an uplink signal (or uplink data) that the RU 220 receives from the user equipment 120, a symbol of a specific signal may be set high in priority. For example, the specific signal may include at least one of a DMRS, ACK information, a physical uplink channel (PUCCH), or uplink control information (UCI) of the uplink signal. For example, an identifier of the transmission timing information 760 for the symbol of the specific signal may indicate the fastest transmission symbol among transmission symbols of the transmission timing.

According to an embodiment, the section extension 750 may be set for each section. For example, the control plane message may include the section extension 750 for a section identifier (id). For example, in a case that the control plane message includes a section (or a section type) having a first section identifier and a section (or a section type) having a second section identifier, the control plane message may include the section extension 750 for the first section identifier and the section extension 750 for the second section identifier, respectively. For example, the section having the first section identifier may be the same as or different from the section having the second section identifier. For example, in a case that the section having the first section identifier is the section type 5, the section having the second section identifier may be the section type 5 or the section type X for ULPI.

According to an embodiment, in a case that the control plane message including the section extension 750 is newly defined, a new definition of an endpoint of the section extension may be required. As described above, a supportable section extension may be defined through a user plane configuration module (or YANG module) of a management plane. The module may define the supportable section extension as follows.

**[Table 4]**

| | | |
|---|---|---|
| **\|** | **+--ro supported-section-types*** | **[section-type]** |
| **\|** | **\| +--ro section-type** | **uint8** |
| **\|** | **\| +--ro supported-section-extensions*** | **uint8** |

Referring to the above-described table, the value (uint8) of the section-type may indicate 5 (i.e., the section type 5) or X (i.e., the section type X) in association with the control plane message. Also, the value (uint8) of the supported-section-extensions may indicate Y. For example, the Y may represent the section extension 750.

According to an embodiment, the RU 220 may transmit a management plane message to a DU 210. For example, the management plane message may include capability information of the RU 220. The RU 220 may report the capability information of the RU 220 through the management plane message. For example, the capability information may include whether to support a function of setting up a transmission timing of a user plane message (or the uplink user plane message) for ULPI. For example, an example of the capability information may be referenced in the table below.

**[Table 5]**

| | |
|---|---|
| • | module: o-ran-module-cap |
| • | +--rw module-capability |
| • | +--ro ru-capabilities |
| • | \| +--ro ru-supported-U-plane-timing-setup? Enumeration |
| • | \| +--ro max-number-of-advanced-symbols? Uint8 |

Referring to the above-described table, the ru-supported-U-plane-timing-setup may indicate whether the RU 220 supports a function of reordering (or allocating, changing, disposing, distributing, mapping) air symbols received based on the section extension 750 and transmitting them through indicated transmission symbols. For example, the ru-supported-U-plane-timing-setup may have one of a first value indicating that the function is supported, a second value indicating that the function is not supported, or a third value indicating that the function is conditionally supported. In the example, a case that the value of the ru-supported-U-plane-timing-setup has the three values is described, but embodiments of the present disclosure are not limited thereto. For example, the value of the ru-supported-U-plane-timing-setup may have four values. At this time, a fourth value indicating that the function is conditionally supported may be further included. For example, the third value may indicate that the function may be limitedly supported only in a case that the same transmission symbol identifier (transmissionSymbolid) is not supported in a section (or a user equipment). For example, the fourth value may indicate that the function may be limitedly supported only in a case that the same transmission symbol identifier (transmissionSymbolid) is not supported in a section (or a user equipment) and in a case of having a pattern of one transmission symbol identifier per slot. An example of a timing (or a transmission symbol) at which an uplink user plane message is transmitted through the section extension 750 set based on the third value will be described in detail in FIG. 8C below. An example of a timing (or a transmission symbol) at which an uplink user plane message is transmitted through the section extension 750 set based on the fourth value will be described in detail in FIG. 8B below.

Referring to the above-described table, the max-number-of-advanced-symbols may indicate the maximum number of advanced symbols. For example, the max-number-of-advanced-symbols may be included (or reported) in a case that the ru-supported-U-plane-timing-setup has the first value, the third value, or the fourth value. In other words, the max-number-of-advanced-symbols may be provided to the DU 210 in a case that the RU 220 supports the function. For example, the maximum number of the advanced symbols may be determined based on a capacity (or a maximum capacity) of a buffer (or memory) of the RU 220.

For example, the advanced symbol may indicate a maximum value with respect to the number of transmission symbols between a transmission symbol in a slot corresponding to an air symbol among air symbols in which an uplink signal (or uplink data) is received, and another transmission symbol in the slot to be changed based on the transmission timing information 760 of the section extension 750 (or one identifier among the identifiers 761, 762, 763, and 764 in the transmission timing information 760). For example, the number of transmission symbols between a first transmission symbol (e.g., a symbol #13) in the slot (e.g., a symbol #0 to the symbol #13) corresponding to a first air symbol among the air symbols, and a second transmission symbol (e.g., a symbol #1) in the slot (e.g., the symbol #0 to the symbol #13) to be changed based on the transmission timing information 760 (or the identifier 761 of the transmission timing information 760) may be 12. The number of transmission symbols between a third transmission symbol (e.g., a symbol #10) in the slot (e.g., the symbol #0 to the symbol #13) corresponding to a second air symbol among the air symbols, and a fourth transmission symbol (e.g., the symbol #3) in the slot (e.g., the symbol #0 to the symbol #13) to be changed based on the transmission timing information 760 (or the identifier 762 of the transmission timing information 760) may be 7. In the example, the maximum number that the RU 220 may support may be 12.

Alternatively, for example, the capability information may include whether a class (e.g., the class A or the class B) for supporting ULPI of the RU 220 is supported and whether the function of setting up the transmission timing of the user plane message (or the uplink user plane message) for the ULPI is supported. For example, an example of the capability information may be referenced in the table below.

**[Table 6]**

| | |
|---|---|
| • | module: o-ran-module-cap |
| • | +--rw module-capability |
| • | +--ro ru-capabilities |
| • | \| +--ro ru-supported-category? Enumeration |
| • | \| +--ro ru-supported-classes? [class-type] |
| • | \| \| +--ro class-type? Enumeration |
| • | \| \| +--ro ru-supported-U-plane-timing-setup? Enumeration |
| • | \| \| \| +--ro max-number-of-advanced-symbols? Uint8 |

Referring to the above-described table, the ru-supported-U-plane-timing-setup and the max-number-of-advanced-symbols may be provided together with the capability information (e.g., the ru-supported-classes and the class-type) indicating whether the class (e.g., the class A or the class B) for supporting the ULPI of the RU 220 is supported. The ru-supported-U-plane-timing-setup and the max-number-of-advanced-symbols may be applied in substantially the same manner as the contents of Table 5 described above. The section extension 750 of FIG. 7B is merely exemplary, and an embodiment of the present disclosure is not limited thereto. For example, a position and a length of parameters in the section extension 750 may be changed.

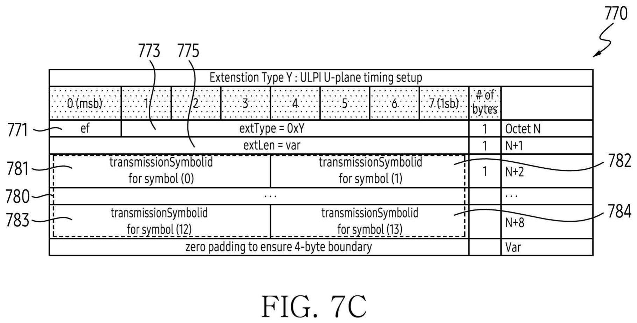

FIG. 7C illustrates an example of a section extension indicating a transmission timing of an uplink user plane message.

FIG. 7C illustrates an example of a section extension 770 indicating a transmission timing of the uplink user plane message. For example, the section extension 770 may be referred to as a section extension to indicate the transmission timing of the uplink user plane message for ULPI. For example, an RU 220 may be associated with a class A or a class B. For example, the transmission timing may represent a timing (or a transmission symbol) at which the RU 220 may transmit the uplink user plane message for each of symbols (or air symbols) receiving an uplink signal (or uplink data) from a user equipment (e.g., the user equipment 120 of FIG. 1).

Referring to FIG. 7C, the section extension 770 may include information indicating the transmission timing of the uplink user plane message for symbols (or air symbols) in which the uplink signal received from the user equipment 120 is received. The section extension 770 may be referred to as extension type information or an extension type.

According to an embodiment, the section extension 770 may be included in a control plane message. For example, the section extension 770 may be included in the control plane message including a specific section type. For example, the specific section type may include a section type 5. Alternatively, for example, the specific section type may include a section type X for ULPI. The section type X may represent an arbitrary section type number. In other words, the section extension 770 may be used (or associated) in connection with the specific section type. For example, the section extension 770 may be included in section fields of the control plane message. For example, the section fields may include at least one section identifier and at least one section extension.

According to an embodiment, the section extension 770 may include a common parameter. For example, the common parameter may include an extension flag (ef) 771, an extension type (extType) 773, and an extension length (extLen) 775.

For example, the ef 771 may be used to indicate whether another section extension following the section extension 770 exists. For example, the ef 771 may have a field length of 1 bit. For example, in a case that a value of the ef 771 is 1, the another section extension may exist. Conversely, in a case that the value of the ef 771 is 0, the another section extension may not exist. The ef 771 may be referred to as an extension flag.

For example, the extType 773 may be used to indicate the section extension 770. For example, the extType 773 may provide a section extension that provides additional parameters specific to a subject data extension. For example, the extType 773 may have a field length of 7 bits. For example, the extType 773 may have different values for each section extension. For example, the extType 773 of the section extension 770 for the DMRS processing may include 0xY. The Y may represent an arbitrary order or number. The Y may represent a number having two or more digits (e.g., 25). The section extension 770 in which the extType 773 is the Y may be referred to as a section extension Y. The extType 773 may be referred to as an index of section extension information.

For example, the extLen 775 may provide a length of the section extension 770. For example, the extLen 775 may provide the length of the section extension 770 in units of 32bits (or 4 bytes) word. For example, the extLen 775 may have a field length of 8 bits. However, an embodiment of the present disclosure is not limited thereto. For example, according to information included in the section extension 770, the extLen 775 may have a field length of 17 bits or more. The extLen 775 may be referred to as a length of the section extension information. For example, the section extension 770 may have a length of 8 bytes indicated by the extLen 775.

According to an embodiment, the section extension 770 may include transmission timing information 780. For example, the transmission timing information 780 may indicate a plurality of transmission symbols included in the transmission timing of the uplink user plane message. For example, the transmission timing information 780 may include identifiers 781, 782, 783, and 784 of the plurality of transmission symbols for symbols (or air symbols) in which uplink data of the uplink user plane message is received.

For example, the number of the identifiers 781, 782, 783, and 784 included in the transmission timing information 780 may be fixed. For example, the number of the identifiers 781, 782, 783, and 784 may correspond to the total number of symbols (e.g., 14) included in a slot included in the time information of the control plane message. In other words, unlike the number of the identifiers 711, 712, 713, and 714 included in the transmission timing information 710 of FIG. 7A and the number of the identifiers 761, 762, 763, and 764 included in the transmission timing information 760 of FIG. 7B, the number of the identifiers 781, 782, 783, and 784 included in the transmission timing information 780 of FIG. 7C may be 14, which is a fixed value.

For example, among the identifiers 781, 782, 783, and 784 of the transmission timing information 780, the identifier 781 may include an identifier of a transmission symbol for an air symbol having a start symbol identifier (e.g., 0) included in the slot of the time information. For example, the identifier 782 may include an identifier of a transmission symbol for an air symbol having a symbol identifier (e.g., 1) following the start symbol identifier. The air symbol having the symbol identifier (e.g., 1) may be continuous to the air symbol having the start symbol identifier (e.g., 0). For example, the identifier 783 may include an identifier of a transmission symbol for an air symbol having a symbol identifier (e.g., 12). For example, the identifier 784 may include an identifier of a transmission symbol for an air symbol having a symbol identifier (e.g., 13). The air symbol having the symbol identifier (e.g., 12) may be continuous to the air symbol having the start symbol identifier (e.g., 13). For example, the symbol identifier (e.g., 13) may be a last symbol in the slot.

Unlike the section extension 700 illustrated in the example of FIG. 7A, each of the identifiers 781, 782, 783, and 784 of the section extension 770 illustrated in the example of FIG. 7C may have a length of 4 bits. Since a size of each of the identifiers 781, 782, 783, and 784 included in the section extension 770 of FIG. 7B is 4 bits and is smaller than 6 bits, which is a size of each of the identifiers 711, 712, and 713 included in the section extension 700 of FIG. 7A, a size of the section extension 770 of FIG. 7B may be smaller than a size of the section extension 700 of FIG. 7A. However, the present disclosure is not limited thereto. For example, by padding bits of the section extension 770, the section extension 770 may be formed in the same size as the section extension 700. In addition, unlike the section extension 700 and the section extension 750 of FIGS. 7A and 7B, the transmission timing information 780 of the section extension 770 illustrated in the example of FIG. 7C may have a fixed size. Accordingly, an octet of the section extension 770 including the identifier 781 and the identifier 782 may be N+2, and an octet of the section extension 770 including the identifier 783 and the identifier 784 may be N+8.

According to an embodiment, the transmission timing information 780 of the section extension 770 may be set based on a fronthaul bandwidth. For example, the identifiers 781, 782, 783, and 784 in the transmission timing information 780 may be prioritized based on the fronthaul bandwidth. For example, a resource defined by the fronthaul bandwidth and a transmission symbol may represent a capacity of a fronthaul (e.g., the fronthaul 215 of FIG. 2A). For example, a priority of each of the identifiers 781, 782, 783, and 784 may be set based on the capacity. For example, among symbols (or air symbols) of an uplink signal (or uplink data) that the RU 220 receives from the user equipment 120, a symbol of a specific signal may be set high in priority. For example, the specific signal may include at least one of a DMRS, ACK information, a physical uplink channel (PUCCH), or uplink control information (UCI) of the uplink signal. For example, an identifier of the transmission timing information 780 for the symbol of the specific signal may indicate the fastest transmission symbol among transmission symbols of the transmission timing.

According to an embodiment, the section extension 770 may be set for each section. For example, the control plane message may include the section extension 770 for a section identifier (id). For example, in a case that the control plane message includes a section (or a section type) having a first section identifier and a section (or a section type) having a second section identifier, the control plane message may include the section extension 770 for the first section identifier and the section extension 770 for the second section identifier, respectively. For example, the section having the first section identifier may be the same as or different from the section having the second section identifier. For example, in a case that the section having the first section identifier is the section type 5, the section having the second section identifier may be the section type 5 or the section type X for ULPI.

According to an embodiment, in a case that the control plane message including the section extension 770 is newly defined, a new definition of an endpoint of the section extension may be required. As described above, a supportable section extension may be defined through a user plane configuration module (or YANG module) of a management plane. The module may define the supportable section extension as follows.

**[Table 7]**

| | | |
|---|---|---|
| **\|** | **+--ro supported-section-types*** | **[section-type]** |
| **\|** | **\| +--ro section-type** | **uint8** |
| **\|** | **\| +--ro supported-section-extensions*** | **uint8** |

Referring to the above-described table, the value (uint8) of the section-type may indicate 5 (i.e., the section type 5) or X (i.e., the section type X) in association with the control plane message. Also, the value (uint8) of the supported-section-extensions may indicate Y. For example, the Y may represent the section extension 770.

According to an embodiment, the RU 220 may transmit a management plane message to a DU 210. For example, the management plane message may include capability information of the RU 220. The RU 220 may report the capability information of the RU 220 through the management plane message. For example, the capability information may include whether to support a function of setting up a transmission timing of a user plane message (or the uplink user plane message) for ULPI. For example, an example of the capability information may be referenced in the table below.

**[Table 8]**

| | |
|---|---|
| • | module: o-ran-module-cap |
| • | +--rw module-capability |
| • | +--ro ru-capabilities |
| • | \| +--ro ru-supported-U-plane-timing-setup? Enumeration |
| • | \| +--ro max-number-of-advanced-symbols? Uint8 |

Referring to the above-described table, the ru-supported-U-plane-timing-setup may indicate whether the RU 220 supports a function of reordering (or allocating, changing, disposing, distributing, mapping) air symbols received based on the section extension 770 and transmitting them through indicated transmission symbols. For example, the ru-supported-U-plane-timing-setup may have one of a first value indicating that the function is supported, a second value indicating that the function is not supported, or a third value indicating that the function is conditionally supported. In the example, a case that the value of the ru-supported-U-plane-timing-setup has the three values is described, but embodiments of the present disclosure are not limited thereto. For example, the value of the ru-supported-U-plane-timing-setup may have four values. At this time, a fourth value indicating that the function is conditionally supported may be further included. For example, the third value may indicate that the function may be limitedly supported only in a case that the same transmission symbol identifier (transmissionSymbolid) is not supported in a section (or a user equipment). For example, the fourth value may indicate that the function may be limitedly supported only in a case that the same transmission symbol identifier (transmissionSymbolid) is not supported in a section (or a user equipment) and in a case of having a pattern of one transmission symbol identifier per slot. An example of a timing (or a transmission symbol) at which an uplink user plane message is transmitted through the section extension 770 set based on the third value will be described in detail in FIG. 8C below. An example of a timing (or a transmission symbol) at which an uplink user plane message is transmitted through the section extension 770 set based on the fourth value will be described in detail in FIG. 8B below. Referring to the above-described table, the max-number-of-advanced-symbols may indicate the maximum number of advanced symbols. For example, the max-number-of-advanced-symbols may be included (or reported) in a case that the ru-supported-U-plane-timing-setup has the first value, the third value, or the fourth value. In other words, the max-number-of-advanced-symbols may be provided to the DU 210 in a case that the RU 220 supports the function. For example, the maximum number of the advanced symbols may be determined based on a capacity (or a maximum capacity) of a buffer (or memory) of the RU 220.

For example, the advanced symbol may indicate a maximum value with respect to the number of transmission symbols between a transmission symbol in a slot corresponding to an air symbol among air symbols in which an uplink signal (or uplink data) is received, and another transmission symbol in the slot to be changed based on the transmission timing information 780 of the section extension 770 (or one identifier among the identifiers 781, 782, 783, and 784 in the transmission timing information 780). For example, the number of transmission symbols between a first transmission symbol (e.g., a symbol #13) in the slot (e.g., a symbol #0 to the symbol #13) corresponding to a first air symbol among the air symbols, and a second transmission symbol (e.g., a symbol #1) in the slot (e.g., the symbol #0 to the symbol #13) to be changed based on the transmission timing information 780 (or the identifier 781 of the transmission timing information 780) may be 12. The number of transmission symbols between a third transmission symbol (e.g., a symbol #10) in the slot (e.g., the symbol #0 to the symbol #13) corresponding to a second air symbol among the air symbols, and a fourth transmission symbol (e.g., the symbol #3) in the slot (e.g., the symbol #0 to the symbol #13) to be changed based on the transmission timing information 780 (or the identifier 782 of the transmission timing information 780) may be 7. In the example, the maximum number that the RU 220 may support may be 12.

Alternatively, for example, the capability information may include whether a class (e.g., the class A or the class B) for supporting ULPI of the RU 220 is supported and whether the function of setting up the transmission timing of the user plane message (or the uplink user plane message) for the ULPI is supported. For example, an example of the capability information may be referenced in the table below.

**[Table 9]**

| | |
|---|---|
| • | module: o-ran-module-cap |
| • | +--rw module-capability |
| • | +--ro ru-capabilities |
| • | \| +--ro ru-supported-category? Enumeration |
| • | \| +--ro ru-supported-classes? [class-type] |
| • | \| \| +--ro class-type? Enumeration |
| • | \| \| +--ro ru-supported-U-plane-timing-setup? Enumeration |
| • | \| \| \| +--ro max-number-of-advanced-symbols? Uint8 |

Referring to the above-described table, the ru-supported-U-plane-timing-setup and the max-number-of-advanced-symbols may be provided together with the capability information (e.g., the ru-supported-classes and the class-type) indicating whether the class (e.g., the class A or the class B) for supporting the ULPI of the RU 220 is supported. The ru-supported-U-plane-timing-setup and the max-number-of-advanced-symbols may be applied in substantially the same manner as the contents of Table 8 described above. The section extension 770 of FIG. 7C is merely exemplary, and an embodiment of the present disclosure is not limited thereto. For example, a position and a length of parameters in the section extension 770 may be changed.

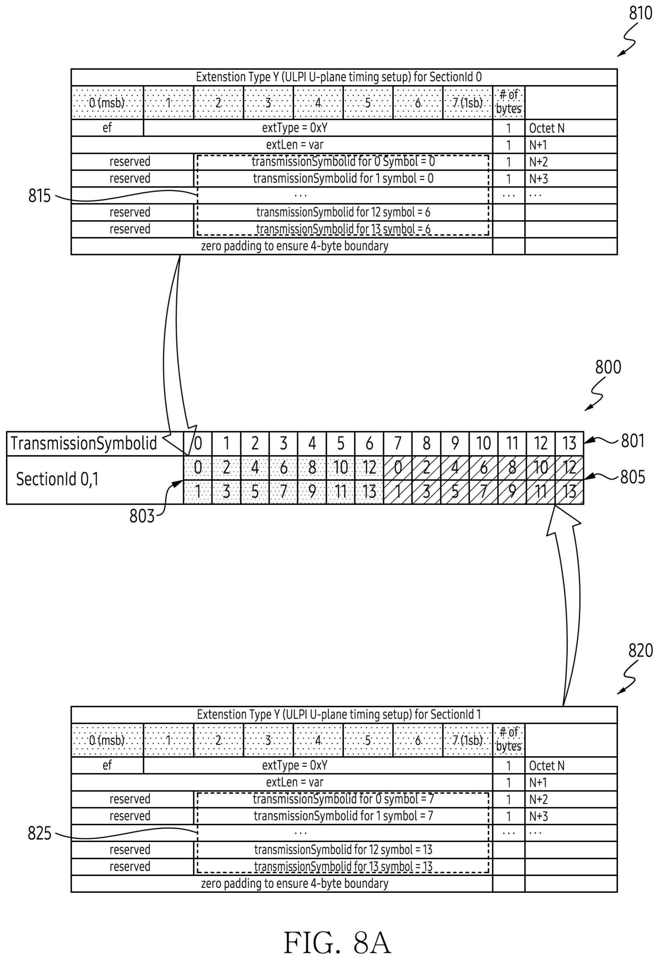

FIGS. 8A to 8C illustrate examples of a timing at which an uplink user plane message is transmitted based on a section extension indicating the transmission timing of the uplink user plane message.

FIGS. 8A to 8C illustrate examples 800, 830, and 850 of a timing (or a transmission timing) at which the uplink user plane message is transmitted. In the examples 800, 830, and 850, an example of the uplink user plane message transmitted at a plurality of transmission symbols included in a slot is illustrated, but embodiments of the present disclosure are not limited thereto.

According to an embodiment, an RU 220 may transmit the uplink user plane message to a DU 210. For example, the RU 220 may transmit the uplink user plane message including an identifier of an air symbol at a specific transmission symbol. At this time, in a case of transmitting an uplink signal (or uplink data) with respect to a plurality of air symbols on the specific transmission symbol, the RU 220 may generate an uplink user plane message separated for each air symbol and transmit a plurality of uplink user plane messages on the specific transmission symbol. Each of the plurality of uplink user plane messages may include an uplink signal (or uplink data) with respect to each of air symbols. Alternatively, for example, the RU 220 may transmit one uplink user plane message on the specific transmission symbol based on a section extension (e.g., the section extension 700 of FIG. 7A, the section extension 750 of FIG. 7B, or the section extension 770 of FIG. 7C) to indicate a transmission timing for an uplink user plane message for ULPI. At this time, the one uplink user plane message may include an uplink signal (or uplink data) received on a plurality of air symbols. At this time, the one uplink user plane message may be generated based on the section extension 700 in which identifiers of a plurality of air symbols are mapped to an identifier of one transmission symbol. In a case of uplink signals (or uplink data) of the plurality of air symbols overlap in a frequency domain, they may be distinguished by a section identifier (ID) (or a user equipment identifier).

Referring to the example 800 of FIG. 8A, transmission symbols 801 may include 14 transmission symbols. For example, for convenience of description, a case that an initial identifier (or index) is 0 and a last identifier (or index) is 13 is illustrated in the example 800, but an embodiment of the present disclosure is not limited thereto.

Referring to the example 800, the RU 220 may receive a control plane message from the DU 210. For example, the control plane message may include two section extensions 810 and 820. For example, each of the section extensions 810 and 820 may be an example of the section extension 700 of FIG. 7A (or the section extension 750 of FIG. 7B or the section extension 770 of FIG. 7C). For example, the section extension 810 may be associated with a first section having a section identifier SectionId 0. For example, the section extension 820 may be associated with a second section having a section identifier SectionId 1. For example, a section type of the first section may correspond to or be different from a section type of the second section.

For example, the section extension 810 may include transmission timing information 815 to indicate a transmission timing (or transmission symbols) for air symbols (air symbols #0 to #13) controlled by the first section. For example, the section extension 820 may include transmission timing information 825 to indicate a transmission timing (or transmission symbols) for air symbols (air symbols #0 to #13) controlled by the second section. At this time, the air symbols controlled by the first section and the air symbols controlled by the second section may correspond (or overlap).

For example, among the air symbols (air symbols #0 to #13), the transmission timing information 815 of the section extension 810 may include an identifier #0 of a transmission symbol for a air symbol (air symbol #0), an identifier #0 of a transmission symbol for an air symbol (air symbol #1), an identifier #6 of a transmission symbol for an air symbol (air symbol #12), and an identifier #6 of a transmission symbol for an air symbol (air symbol #13). In addition, among the air symbols (air symbols #0 to #13), the transmission timing information 825 of the section extension 820 may include an identifier #7 of a transmission symbol for an air symbol (air symbol #0), an identifier #7 of a transmission symbol for an air symbol (air symbol #1), an identifier #13 of a transmission symbol for an air symbol (air symbol #12), and an identifier #13 of a transmission symbol for an air symbol (air symbol #13). In other words, a plurality of air symbols may be mapped with respect to one transmission symbol (or an identifier of the transmission symbol).

Referring to the example 800, air symbols 803 associated with the first section having the section identifier SectionId 0 may be mapped (or reordered) to a portion (e.g., transmission symbols having identifiers 0 to 6) of the transmission symbols 801. An uplink signal (or uplink data) received at the air symbols 803 associated with the first section may be transmitted at the portion of the transmission symbols 801. For example, an uplink user plane message including an uplink signal (or uplink data) received at air symbols (air symbol #0 and air symbol #1) associated with the first section may be transmitted at a transmission symbol (transmission symbol #0). Alternatively, an uplink user plane message including an uplink signal (or uplink data) received at air symbols (air symbol #2 and air symbol #3) associated with the first section may be transmitted at a transmission symbol (transmission symbol #1). Alternatively, an uplink user plane message including an uplink signal (or uplink data) received at air symbols (air symbol #12 and air symbol #13) associated with the first section may be transmitted at a transmission symbol (transmission symbol #6).

In addition, referring to the example 800, air symbols 805 associated with the second section having the section identifier SectionId 1 may be mapped (or reordered) to another portion (e.g., transmission symbols having identifiers #7 to #13) of the transmission symbols 801. An uplink signal (or uplink data) received at the air symbols 805 associated with the second section may be transmitted at the another portion of the transmission symbols 801. For example, an uplink user plane message including an uplink signal (or uplink data) received at air symbols (air symbol #0 and air symbol #1) associated with the second section may be transmitted at a transmission symbol #7. Alternatively, an uplink user plane message including an uplink signal (or uplink data) received at air symbols (air symbol #2 and air symbol #3) associated with the second section may be transmitted at a transmission symbol (transmission symbol #8). Alternatively, an uplink user plane message including an uplink signal (or uplink data) received at air symbols (air symbol #12 and air symbol #13) associated with the second section may be transmitted at a transmission symbol (transmission symbol #13).

Referring to the example 830 of FIG. 8B, transmission symbols 831 may include 14 transmission symbols. For example, for convenience of description, a case that an initial identifier (or index) is 0 and a last identifier (or index) is 13 is illustrated in the example 830, but an embodiment of the present disclosure is not limited thereto.

Referring to the example 830, the RU 220 may receive a control plane message from the DU 210. For example, the control plane message may include two section extensions. For example, each of the two section extensions may be an example of the section extension 700 of FIG. 7A (or the section extension 750 of FIG. 7B or the section extension 770 of FIG. 7C). For example, a section extension of the two section extensions may be associated with a first section having a section identifier SectionId 0. For example, another section extension of the two section extensions may be associated with a second section having a section identifier SectionId 1. For example, a section type of the first section may correspond to or be different from a section type of the second section.

The RU 220 of the example 830 may provide the DU 210 with capability information of the RU 220 through a management plane message before transmitting the control plane message. At this time, the capability information may include the ru-supported-U-plane-timing-setup having a fourth value. For example, the fourth value may indicate that the function may be limitedly supported only in a case that the same transmission symbol identifier (transmissionSymbolid) is not supported in a section (or a user equipment) and in a case of having a pattern of one transmission symbol identifier per slot.

Referring to the example 830, air symbols 833 associated with the first section having the section identifier SectionId 0 may be transmitted through the transmission symbols 831. At this time, an order of the air symbols 833 associated with the first section may be reordered. For example, other than being mapped to the transmission symbols 831 according to an order in which air symbols are received (e.g., air symbol #0, air symbol #1, ..., air symbol #12, and air symbol #13), an air symbol (air symbol #13) may be mapped to a transmission symbol (transmission symbol #1), and an air symbol (air symbol #12) may be mapped to a transmission symbol (transmission symbol #2). For example, an uplink user plane message including an uplink signal (or uplink data) received at an air symbol (air symbol #0) associated with the first section may be transmitted at a transmission symbol (transmission symbol #0). In addition, an uplink user plane message including an uplink signal (or uplink data) received at an air symbol (air symbol #13) associated with the first section may be transmitted at a transmission symbol (transmission symbol #1).

In addition, referring to the example 830, air symbols 835 associated with the second section having the section identifier SectionId 1 may be transmitted through the transmission symbols 831. At this time, an order of the air symbols 835 associated with the second section may be reordered. For example, other than being mapped to the transmission symbols 831 according to an order in which air symbols are received (e.g., air symbol #0, air symbol #1, ..., air symbol #12, and air symbol #13), an air symbol (air symbol #13) may be mapped to a transmission symbol 1, and an air symbol (air symbol #12) may be mapped to a transmission symbol (transmission symbol #2). For example, an uplink user plane message including an uplink signal (or uplink data) received at an air symbol (air symbol #0) associated with the second section may be transmitted at a transmission symbol 0. In addition, an uplink user plane message including an uplink signal (or uplink data) received at an air symbol (air symbol #13) associated with the second section may be transmitted at a transmission symbol (transmission symbol #1).

Referring to the example 830, based on the capability information including the ru-supported-U-plane-timing-setup having the fourth value being provided to the DU 210 through the management plane message, the DU 210 may control the RU 220 to transmit the uplink user plane message as in the example 830 by using the two section extensions. At this time, according to the ru-supported-U-plane-timing-setup having the fourth value, the order of the air symbols 833 associated with the first section and the order of the air symbols 835 associated with the second section may correspond to (or be the same as) each other. For example, the order of the air symbols 833 (or the air symbols 835) may be referred to as a pattern of a transmission symbol identifier. In addition, in a case of the example 830, unlike the example 800, according to the ru-supported-U-plane-timing-setup having the fourth value, one air symbol per one section (or user equipment) may be mapped to one transmission symbol.

Referring to the example 850 of FIG. 8C, transmission symbols 851 may include 14 transmission symbols. For example, for convenience of description, a case that an initial identifier (or index) is 0 and a last identifier (or index) is 13 is illustrated in the example 850, but an embodiment of the present disclosure is not limited thereto.

Referring to the example 850, the RU 220 may receive a control plane message from the DU 210. For example, the control plane message may include two section extensions. For example, each of the two section extensions may be an example of the section extension 700 of FIG. 7A (or the section extension 750 of FIG. 7B or the section extension 770 of FIG. 7C). For example, a section extension of the two section extensions may be associated with a first section having a section identifier SectionId 0. For example, another section extension of the two section extensions may be associated with a second section having a section identifier SectionId 1. For example, a section type of the first section may correspond to or be different from a section type of the second section.

The RU 220 of the example 850 may provide the DU 210 with capability information of the RU 220 through a management plane message before transmitting the control plane message. At this time, the capability information may include the ru-supported-U-plane-timing-setup having a third value. For example, the third value may indicate that the function may be limitedly supported only in a case that the same transmission symbol identifier (transmissionSymbolid) is not supported in a section (or a user equipment).

Referring to the example 850, air symbols 853 associated with the first section having the section identifier SectionId 0 may be transmitted through the transmission symbols 851. At this time, an order of the air symbols 853 associated with the first section may be reordered. For example, other than being mapped to the transmission symbols 851 according to an order in which air symbols are received (e.g., air symbol #0, air symbol #1, ..., air symbol #12, and air symbol #13), an air symbol (air symbol #13) may be mapped to a transmission symbol 1, an air symbol (air symbol #12) may be mapped to a transmission symbol (transmission symbol #2), an air symbol (air symbol #11) may be mapped to a transmission symbol (transmission symbol #3), and an air symbol (air symbol #10) may be mapped to a transmission symbol (transmission symbol #4). For example, an uplink user plane message including an uplink signal (or uplink data) received at an air symbol (air symbol #0) associated with the first section may be transmitted at a transmission symbol (transmission symbol #0). In addition, an uplink user plane message including an uplink signal (or uplink data) received at an air symbol (air symbol #13) associated with the first section may be transmitted at a transmission symbol (transmission symbol #1). In addition, an uplink user plane message including an uplink signal (or uplink data) received at an air symbol (air symbol #12) associated with the first section may be transmitted at a transmission symbol (transmission symbol #2). In addition, an uplink user plane message including an uplink signal (or uplink data) received at an air symbol (air symbol #11) associated with the first section may be transmitted at a transmission symbol (transmission symbol #3). In addition, an uplink user plane message including an uplink signal (or uplink data) received at an air symbol (air symbol #10) associated with the first section may be transmitted at a transmission symbol (transmission symbol #4).

In addition, referring to the example 850, air symbols 855 associated with the second section having the section identifier SectionId 1 may be transmitted through the transmission symbols 851. At this time, an order of the air symbols 855 associated with the second section may be reordered. For example, other than being mapped to the transmission symbols 851 according to an order in which air symbols are received (e.g., air symbol #0, air symbol #1, ..., air symbol #12, and air symbol #13), an air symbol (air symbol #13) may be mapped to a transmission symbol (transmission symbol #1), an air symbol (air symbol #12) may be mapped to a transmission symbol (transmission symbol #2), an air symbol (air symbol #11) may be mapped to a transmission symbol (transmission symbol #3), and an air symbol (air symbol #10) may be mapped to a transmission symbol (transmission symbol #4). For example, an uplink user plane message including an uplink signal (or uplink data) received at an air symbol (air symbol #0) associated with the second section may be transmitted at a transmission symbol (transmission symbol #0). In addition, an uplink user plane message including an uplink signal (or uplink data) received at an air symbol (air symbol #13) associated with the second section may be transmitted at a transmission symbol (transmission symbol #1). In addition, an uplink user plane message including an uplink signal (or uplink data) received at an air symbol (air symbol #12) associated with the second section may be transmitted at a transmission symbol (transmission symbol #2). In addition, an uplink user plane message including an uplink signal (or uplink data) received at an air symbol (air symbol #10) associated with the second section may be transmitted at a transmission symbol (transmission symbol #3). In addition, an uplink user plane message including an uplink signal (or uplink data) received at an air symbol (air symbol #1) associated with the second section may be transmitted at a transmission symbol (transmission symbol #4).

Referring to the example 850, based on the capability information including the ru-supported-U-plane-timing-setup having the third value being provided to the DU 210 through the management plane message, the DU 210 may control the RU 220 to transmit the uplink user plane message as in the example 850 by using the two section extensions. At this time, according to the ru-supported-U-plane-timing-setup having the third value, the order of the air symbols 853 associated with the first section and the order of the air symbols 855 associated with the second section may not correspond to (or may be different from) each other. For example, the order of the air symbols 853 (or the air symbols 855) may be referred to as a pattern of a transmission symbol identifier. In addition, in a case of the example 850, unlike the example 800, according to the ru-supported-U-plane-timing-setup having the third value, one air symbol per one section (or user equipment) may be mapped to one transmission symbol.

Referring to the above description, the DU 210 may control the transmission timing of the uplink user plane message through the control plane message including the section extension (e.g., the section extension 700 of FIG. 7A, the section extension 750 of FIG. 7B, or the section extension 770 of FIG. 7C). The examples 800, 830, and 850 of FIGS. 8A to 8C are merely exemplary for convenience of description, and embodiments of the present invention are not limited to the transmission timing illustrated in the examples 800, 830, and 850.

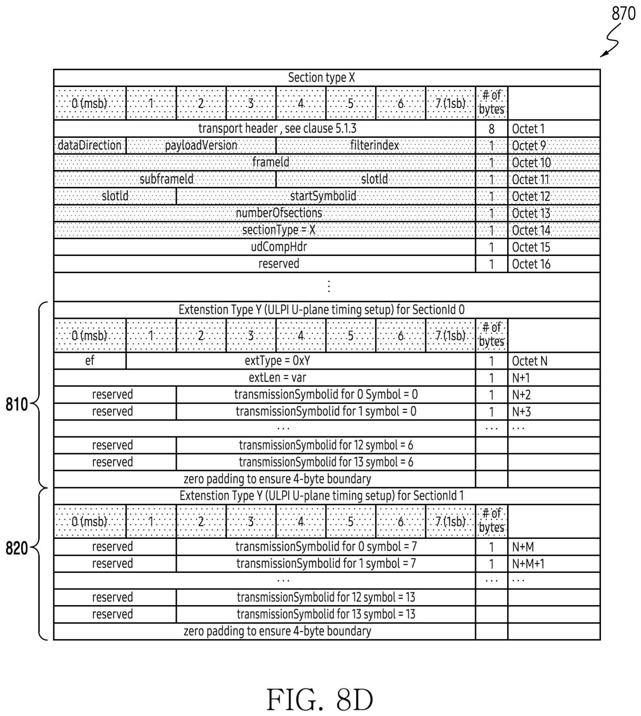

FIG. 8D illustrates an example of a section including a plurality of section extensions.

FIG. 8D illustrates an example of a section 870 including a plurality of section extensions 810 and 820. The section extensions 810 and 820 of FIG. 8D may represent an example of the section extensions 810 and 820 of FIG. 8A. In FIG. 8D, an example in which the section 870 includes the two section extensions 810 and 820 is illustrated, but the present disclosure is not limited thereto. For example, three or more section extensions may be included in the section 870.

A section type of the section 870 of FIG. 8D may include a section type X for ULPI. The section type X may represent an arbitrary section type number. However, the present disclosure is not limited thereto. For example, the section type of section 870 of FIG. 8D may include a section type 5 or may include another section type.

For example, the section extension 810 may be associated with the section 870 having a section identifier SectionId 0. For example, the section extension 820 may be associated with a section 870 having a section identifier SectionId 1. For example, the section 870 may be a section in which a function that may be associated with a plurality of section identifiers is activated. Although not illustrated in FIG. 8D, the section 870 may further include information for indicating activation of the function.

For example, as the function is activated, the section 870 may include the section extensions 810 and 820 with respect to the plurality of section identifiers. For example, the section extensions 810 and 820 may be set with respect to different user equipments. In FIG. 8D, an example in which each of the section extensions 810 and 820 is configured with the same structure as the section extension 700 of FIG. 7A is illustrated, but the present disclosure is not limited thereto. For example, the section extensions 810 and 820 may be configured with a structure of the section extension 750 of FIG. 7B or the section extension 770 of FIG. 7C. Alternatively, for example, among the section extensions 810 and 820, the section extension 810 may be configured with the structure of the section extension 750 of FIG. 7B, and the section extension 820 may be configured with the structure of the section extension 770 of FIG. 7C.

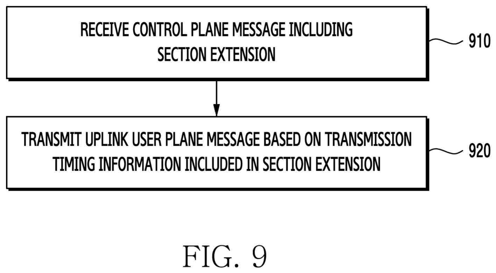

FIG. 9 illustrates an example of an operation flow of a method in which an RU transmits an uplink user plane message based on a section extension indicating a transmission timing of the uplink user plane message.

At least a portion of the method of FIG. 9 may be performed by the RU 220 of FIG. 3B. For example, at least a portion of the method may be controlled by a processor 380 of the RU 220. In the following embodiment, each operation may be sequentially performed, but is not necessarily performed sequentially. For example, an order of each operation may be changed, and at least two operations may be performed in parallel. For example, the RU 220 may be associated with a class A or a class B.

According to an embodiment, in operation 910, the RU 220 may receive a control plane message including a section extension from a DU (e.g., the DU 210 of FIG. 2A). For example, the RU 220 may receive the control plane message including the section extension that includes transmission timing information of an uplink user plane message for ULPI. For example, the RU 220 may receive the control plane message including the section extension from the DU 210. For example, the section extension may include information indicating the transmission timing of the uplink user plane message for symbols (or air symbols) in which an uplink signal received from a user equipment 120 is received. The section extension may be referred to as extension type information or an extension type.

According to an embodiment, the section extension may be included in a control plane message. For example, the section extension may be included in the control plane message including a specific section type. For example, the specific section type may include a section type 5. Alternatively, for example, the specific section type may include a section type X for ULPI. The section type X may represent an arbitrary section type number. In other words, the section extension may be used (or associated) in connection with the specific section type.

According to an embodiment, the section extension may include a common parameter. For example, the common parameter may include an extension flag (ef), an extension type (extType), and an extension length (extLen). For specific information related to this, contents of FIGS. 7A to 7C may be referenced.

According to an embodiment, the section extension may include transmission timing information. For example, the transmission timing information may indicate a plurality of transmission symbols included in the transmission timing of the uplink user plane message. For example, the transmission timing information may include identifiers of the plurality of transmission symbols for symbols (or air symbols) in which uplink data of the uplink user plane message is received.

For example, the number of identifiers included in the transmission timing information may be determined based on time information of a control plane message to control transmission of the uplink user plane message. For example, the number of identifiers may correspond to information indicating the number of symbols included in the time information of the control plane message. For example, a maximum value of the number of identifiers may correspond to the number of symbols included in a slot. For example, the maximum value may be 14. In other words, the section extension may be set in units of one slot.

For example, among the identifiers of the transmission timing information, an identifier may include an identifier of a transmission symbol for an air symbol having a start symbol identifier (e.g., startSymbolid) of the time information. For example, the identifier may include an identifier of a transmission symbol for an air symbol having a symbol identifier (e.g., startSymbolid+1) following the start symbol identifier. The air symbol having the symbol identifier (e.g., startSymbolid+1) may be continuous to the air symbol having the start symbol identifier (e.g., startSymbolid). For example, the identifier 713 may include an identifier of a transmission symbol for an air symbol having a symbol identifier (e.g., startSymbolid+numSymbol-1). For example, the symbol identifier (e.g., startSymbolid+numSymbol-1) may be determined based on the starting symbol identifier and information indicating the number of the symbols. For example, each of the identifiers may have a length of 6 bits.

According to an embodiment, the transmission timing information of the section extension may be set based on a fronthaul bandwidth. For example, the identifiers in the transmission timing information may be prioritized based on the fronthaul bandwidth. For example the fronthaul bandwidth and a transmission symbol may represent a capacity of a fronthaul (e.g., the fronthaul 215 of FIG. 2A). For example, a priority of each of the identifiers may be set based on the capacity. For example, among symbols (or air symbols) of an uplink signal (or uplink data) that the RU 220 receives from the user equipment 120, a symbol of a specific signal may be set high in priority. For example, the specific signal may include at least one of a DMRS, ACK information, a physical uplink channel (PUCCH), or uplink control information (UCI) of the uplink signal. For example, an identifier of the transmission timing information for the symbol of the specific signal may indicate the fastest transmission symbol among transmission symbols of the transmission timing.

According to an embodiment, the section extension may be set for each section. For example, the control plane message may include the section extension for a section identifier (id). For example, in a case that the control plane message includes a section (or a section type) having a first section identifier and a section (or a section type) having a second section identifier, the control plane message may include the section extension for the first section identifier and the section extension for the second section identifier, respectively. For example, the section having the first section identifier may be the same as or different from the section having the second section identifier. For example, in a case that the section having the first section identifier is the section type 5, the section having the second section identifier may be the section type 5 or the section type X for ULPI.

According to an embodiment, the RU 220 may transmit a management plane message to a DU 210. For example, the management plane message may include capability information of the RU 220. The RU 220 may report the capability information of the RU 220 through the management plane message. For example, the capability information may include whether to support a function of setting up a transmission timing of a user plane message (or the uplink user plane message) for ULPI. An example of the capability information included in the management plane message may may refer to the Table 2 or the Table 3.

According to an embodiment, the RU 220 may receive an uplink signal (or uplink data) from the user equipment 120 on air symbols indicated by the control plane message after receiving the control plane message in the operation 910. For example, after receiving the uplink signal, the RU 220 may perform processing with respect to the uplink signal. For example, the processing may include beamforming or equalizing.

According to an embodiment, in operation 920, the RU 220 may transmit an uplink user plane message based on the transmission timing information included in the section extension.

For example, the RU 220 may transmit one uplink user plane message on the specific transmission symbol based on the section extension to indicate a transmission timing for an uplink user plane message for ULPI. At this time, the one uplink user plane message may include an uplink signal (or uplink data) received on a plurality of air symbols. At this time, the one uplink user plane message may be generated based on the section extension in which identifiers of a plurality of air symbols are mapped to an identifier of one transmission symbol. In a case of uplink signals (or uplink data) of the plurality of air symbols overlap in a frequency domain, they may be distinguished by a section identifier (ID) (or a user equipment identifier).

An example of a transmission timing (or transmission symbols) at which the uplink user plane message is transmitted based on the section extension may refer to FIGS. 8A to 8C.

An apparatus, a method, and a storage medium according to embodiments of the present disclosure may order (or rearrange) an order of symbols (or symbols in the slot) with respect to the uplink signal received by the RU 220, when transmitting the uplink signal, received by the RU 220 from the user equipment 120, in the slot to the DU 210. For example, the apparatus, the method, and the storage medium according to embodiments of the present disclosure may indicate a timing to transmit an uplink message (e.g., an uplink user plane message) including the uplink signal (or uplink data) received by the RU 220. Accordingly, as the DU 210 may first obtain the DMRS located in the rear portion in the slot and process the uplink signal (or uplink data), uplink performance including processing speed may be improved in terms of a system (or a base station) including the DU 210 and the RU 220.

In addition, for example, the apparatus, the method, and the storage medium according to embodiments of the present disclosure may provide the DU 210 with an uplink message including an uplink signal for each specific user equipment (or section identifier (section ID)), in a case that the RU 220 simultaneously receives an uplink signal from each of a plurality of user equipments in the slot. The DU 210 may perform decoding based on the uplink message sequentially received with respect to each of the plurality of user equipments. Accordingly, as the DU 210 may effectively perform decoding with respect to each user equipment, uplink performance may be improved.

The effects that may be obtained from the present disclosure are not limited to those described above, and any other effects not mentioned herein will be clearly understood by those having ordinary knowledge in the art to which the present disclosure belongs, from the following description.

As described above, a radio unit (RU) may comprise memory comprising one or more storage media storing instructions. The RU may comprise a transceiver. The RU may comprise at least one processor comprising processing circuitry. The instructions, when executed by the at least one processor individually or collectively, may cause the RU to receive, from a distributed unit (DU), a control plane message including a section extension. The section extension may include transmission timing information for an uplink user plane message. The instructions, when executed by the at least one processor individually or collectively, may cause the RU to transmit, to the DU, the uplink user plane message based on the transmission timing information included in the section extension. The transmission timing information may include identifiers of a plurality of transmission symbols for symbols in which uplink data is received from a user equipment (UE).

According to an embodiment, the instructions, when executed by the at least one processor individually or collectively, may cause the RU to receive, from the UE, the uplink data. The instructions, when executed by the at least one processor individually or collectively, may cause the RU to generate the uplink user plane message, to be transmitted to the DU, based on the uplink data. The symbols may be determined based on a start symbol identifier in common header fields of the control plane message and information indicating the number of symbols in section fields of the control plane message. The section extension may be included in the section fields of the control plane message.

According to an embodiment, in a case that the symbols in which the uplink data is received include a first symbol, a second symbol, and a third symbol, the identifiers of the transmission timing information may include a first identifier of a first transmission symbol mapped to the first symbol from among the plurality of transmission symbols, the first identifier of the first transmission symbol mapped to the second symbol from among the plurality of transmission symbols, a second identifier of a second transmission symbol mapped to the third symbol from among the plurality of transmission symbols.

According to an embodiment, the control plane message may be associated with a section type 5 or a section type for ULPI.

According to an embodiment, the control plane message may further include another section extension including another transmission timing for another uplink user plane message. The section extension may be associated with a first section having a first section identifier. The another section extension may be associated with a second section having a second section identifier.

According to an embodiment, the other transmission timing information may include other identifiers of a plurality of other transmission symbols for the symbols in which other uplink data is received from another UE. The plurality of other transmission symbols may be consecutive to the plurality of transmission symbols. The plurality of transmission symbols and the plurality of other transmission symbols may be included in a slot.

According to an embodiment, the instructions, when executed by the at least one processor individually or collectively, may cause the RU to receive the other uplink data from the another UE. The instructions, when executed by the at least one processor individually or collectively, may cause the RU to generate the another uplink user plane message, to be transmitted to the DU, based on the other uplink data.

According to an embodiment, the instructions, when executed by the at least one processor individually or collectively, may cause the RU to transmit, to the DU, a management plane message including capability information indicating whether the RU supports the section extension for ULPI. The capability information may include one value among a first value indicating that the RU does not support the section extension, a second value indicating that the RU supports the section extension, and a third value indicating that the RU conditionally supports the section extension.

According to an embodiment, the management plane message may further include a maximum number of advanced symbols in a case that the capability information has the second value or the third value. The maximum number of the advanced symbols may represent a maximum value of the number of transmission symbols between a first transmission symbol in a slot corresponding to a symbol from among the symbols in which the uplink data is received and a second transmission symbol in the slot to be changed based on the indication information from the first transmission symbol. For example, the maximum number of the advanced symbols may be determined based on a capacity (or a maximum capacity) of a buffer (or memory) of an RU 220.

According to an embodiment, the section extension may include an extension flag, an index of the section extension, and a length of the section extension.

As described above, a distributed unit (DU) may comprise memory comprising one or more storage media storing instructions. The DU may comprise a transceiver. The DU may comprise at least one processor comprising processing circuitry. The instructions, when executed by the at least one processor individually or collectively, may cause the DU to transmit, to a radio unit (RU), a control plane message including a section extension. The section extension may include transmission timing information for an uplink user plane message. The instructions, when executed by the at least one processor individually or collectively, may cause the DU to receive, from the RU, the uplink user plane message based on the transmission timing information included in the section extension. The transmission timing information may include identifiers of a plurality of transmission symbols for symbols in which uplink data is received from a user equipment (UE).

According to an embodiment, the uplink data may be received from the UE by the RU. The symbols may be determined based on a start symbol identifier in common header fields of the control plane message and information indicating the number of symbols in section fields of the control plane message. The section extension may be included in the section fields of the control plane message.

According to an embodiment, in a case that the symbols in which the uplink data is received include a first symbol, a second symbol, and a third symbol, the identifiers of the transmission timing information may include a first identifier of a first transmission symbol mapped to the first symbol from among the plurality of transmission symbols, the first identifier of the first transmission symbol mapped to the second symbol from among the plurality of transmission symbols, a second identifier of a second transmission symbol mapped to the third symbol from among the plurality of transmission symbols.

According to an embodiment, the control plane message may further include another section extension indicating another transmission timing for another uplink user plane message. The section extension may be associated with a first section having a first section identifier. The another section extension may be associated with a second section having a second section identifier. The other transmission timing information may include other identifiers of a plurality of other symbols for the symbols in which another uplink data is received from another UE. The plurality of other uplink transmission symbols may be consecutive to the plurality of transmission symbols. The plurality of transmission symbols and the plurality of other uplink transmission symbols may be included in a slot.

According to an embodiment, the instructions, when executed by the at least one processor individually or collectively, may cause the DU to receive, from the RU, a management plane message including capability information indicating whether the RU supports the section extension for ULPI. The capability information may include one value among a first value indicating that the RU does not support the section extension, a second value indicating that the RU supports the section extension, and a third value indicating that the RU conditionally supports the section extension.

As described above, a method performed by a radio unit (RU) may comprise receiving, from a distributed unit (DU), a control plane message including a section extension. The section extension may include transmission timing information for an uplink user plane message. The method may comprise transmitting, to the DU, the uplink user plane message based on the transmission timing information included in the section extension. The transmission timing information may include identifiers of a plurality of transmission symbols for symbols in which uplink data is received from a user equipment (UE).

According to an embodiment, the method may comprise receiving, from the UE, the uplink data. The method may comprise generating the uplink user plane message, to be transmitted to the DU, based on the uplink data. The symbols may be determined based on a start symbol identifier in common header fields of the control plane message and information indicating the number of symbols in section fields of the control plane message. The section extension may be included in the section fields of the control plane message.

According to an embodiment, in a case that the symbols in which the uplink data is received include a first symbol, a second symbol, and a third symbol, the identifiers of the transmission timing information may include a first identifier of a first transmission symbol mapped to the first symbol from among the plurality of transmission symbols, the first identifier of the first transmission symbol mapped to the second symbol from among the plurality of transmission symbols, a second identifier of a second transmission symbol mapped to the third symbol from among the plurality of transmission symbols.

According to an embodiment, the control plane message may be associated with a section type 5 or a section type for ULPI.

As described above, a computer-readable storage medium may store one or more programs including instructions that, when executed by at least one processor of a radio unit (RU) comprising a transceiver individually or collectively, cause the RU to receive, from a distributed unit (DU), a control plane message including a section extension. The section extension may include transmission timing information for an uplink user plane message. The computer-readable storage medium may store one or more programs including instructions that, when executed by the at least one processor individually or collectively, cause the RU to transmit, to the DU, the uplink user plane message based on the transmission timing information included in the section extension. The transmission timing information may include identifiers of a plurality of transmission symbols for symbols in which uplink data is received from a user equipment (UE).

As described above, a method performed by a distributed unit (DU) may comprise transmitting, to a radio unit (RU), a control plane message including a section extension. The section extension may include transmission timing information for an uplink user plane message. The method may comprise receiving, from the RU, the uplink user plane message based on the transmission timing information included in the section extension. The transmission timing information may include identifiers of a plurality of transmission symbols for symbols in which uplink data is received from a user equipment (UE).

As described above, a computer-readable storage medium may store one or more programs including instructions that, when executed by at least one processor of a distributed unit (DU) comprising a transceiver individually or collectively, cause the DU to transmit, to a radio unit (RU), a control plane message including a section extension. The section extension may include transmission timing information for an uplink user plane message. The computer-readable storage medium may store one or more programs including instructions that, when executed by the at least one processor individually or collectively, cause the DU to receive, from the RU, the uplink user plane message based on the transmission timing information included in the section extension. The transmission timing information may include identifiers of a plurality of transmission symbols for symbols in which uplink data is received from a user equipment (UE).

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A radio unit (RU) comprising:
memory comprising one or more storage media storing instructions;
a transceiver; and
at least one processor; and
wherein the instructions, when executed by the at least one processor individually or collectively, cause the RU to:
receive, from a distributed unit (DU), a control plane message including a section extension, the section extension including transmission timing information for an uplink user plane message; and
transmit, to the DU, the uplink user plane message based on the transmission timing information included in the section extension, and
wherein the transmission timing information includes identifiers of a plurality of transmission symbols for symbols in which uplink data is received from a user equipment (UE).

2. The RU of claim 1,
wherein the instructions, when executed by the at least one processor individually or collectively, cause the RU to:
receive, from the UE, the uplink data; and
generate the uplink user plane message, to be transmitted to the DU, based on the uplink data,
wherein the symbols are determined based on a start symbol identifier in common header fields of the control plane message and information indicating the number of symbols in section fields of the control plane message, and
wherein the section extension is included in the section fields of the control plane message.

3. The RU of claim 2,
in a case that the symbols in which the uplink data is received include a first symbol, a second symbol, and a third symbol, wherein the identifiers of the transmission timing information include:
a first identifier of a first transmission symbol mapped to the first symbol from among the plurality of transmission symbols,
the first identifier of the first transmission symbol mapped to the second symbol from among the plurality of transmission symbols, and
a second identifier of a second transmission symbol mapped to the third symbol from among the plurality of transmission symbols.

4. The RU of claim 1,
wherein the control plane message is associated with a section type 5 or a section type for uplink performance improvement (ULPI).

5. The RU of claim 1,
wherein the control plane message further includes another section extension including another transmission timing information for another uplink user plane message,
wherein the section extension is associated with a first section having a first section identifier, and
wherein the another section extension is associated with a second section having a second section identifier.

6. The RU of claim 5,
wherein the other transmission timing information includes another identifiers of another transmission symbols for the symbols in which another uplink data is received from another UE,
wherein the plurality of other transmission symbols are consecutive to the plurality of transmission symbols, and
wherein the plurality of transmission symbols and the plurality of other transmission symbols are included in a slot.

7. The RU of claim 1,
wherein the instructions, when executed by the at least one processor individually or collectively, cause the RU to:
transmit, to the DU, a management plane message including capability information indicating whether the RU supports the section extension for uplink performance improvement (ULPI),
wherein the capability information includes one value among:
a first value indicating that the RU does not support the section extension,
a second value indicating that the RU supports the section extension, and
a third value indicating that the RU conditionally supports the section extension.

8. The RU of claim 7,
wherein the management plane message further includes a maximum number of advanced symbols in a case that the capability information has the second value or the third value, and
wherein the maximum number of the advanced symbols represents a maximum value of the number of transmission symbols between a first transmission symbol in a slot corresponding to a symbol from among the symbols in which the uplink data is received and a second transmission symbol in the slot to be changed based on the indication information from the first transmission symbol.

9. A distributed unit (DU) comprising:
memory comprising one or more storage media storing instructions;
a transceiver; and
at least one processor comprising processing circuitry; and
wherein the instructions, when executed by the at least one processor individually or collectively, cause the DU to:
transmit, to a radio unit (RU), a control plane message including a section extension, the section extension including transmission timing information for an uplink user plane message; and
receive, from the RU, the uplink user plane message based on the transmission timing information included in the section extension, and
wherein the transmission timing information includes identifiers of a plurality of transmission symbols for symbols in which uplink data is received from a user equipment (UE).

10. The DU of claim 9,
wherein the uplink data is received from the UE by the RU, and
wherein the symbols are determined based on a start symbol identifier in common header fields of the control plane message and information indicating the number of symbols in section fields of the control plane message, and
wherein the section extension is included in the section fields of the control plane message.

11. The DU of claim 10,
in a case that the symbols in which the uplink data is received include a first symbol, a second symbol, and a third symbol, wherein the identifiers of the transmission timing information include:
a first identifier of a first transmission symbol mapped to the first symbol from among the plurality of transmission symbols,
the first identifier of the first transmission symbol mapped to the second symbol from among the plurality of transmission symbols, and
a second identifier of a second transmission symbol mapped to the third symbol from among the plurality of transmission symbols.

12. The DU of claim 9,
wherein the control plane message further includes another section extension indicating another transmission timing for another uplink user plane message,
wherein the section extension is associated with a first section having a first section identifier,
wherein the another section extension is associated with a second section having a second section identifier,
wherein the other transmission timing information includes other identifiers of a plurality of other symbols for the symbols in which another uplink data is received from another UE,
wherein the plurality of other uplink transmission symbols are consecutive to the plurality of transmission symbols, and
wherein the plurality of transmission symbols and the plurality of other uplink transmission symbols are included in a slot.

13. The DU of claim 9,
wherein the instructions, when executed by the at least one processor individually or collectively, cause the DU to:
receive, from the RU, a management plane message including capability information indicating whether the RU supports the section extension for uplink performance improvement (ULPI),
wherein the capability information includes one value among:
a first value indicating that the RU does not support the section extension,
a second value indicating that the RU supports the section extension, and
a third value indicating that the RU conditionally supports the section extension.

14. A method performed by a radio unit (RU) comprising:
receiving, from a distributed unit (DU), a control plane message including a section extension, the section extension including transmission timing information for an uplink user plane message; and
transmitting, to the DU, the uplink user plane message based on the transmission timing information included in the section extension, and
wherein the transmission timing information includes identifiers of a plurality of transmission symbols for symbols in which uplink data is received from a user equipment (UE).

15. A computer-readable storage medium storing one or more programs including instructions that, when executed by at least one processor of a radio unit (RU) comprising a transceiver individually or collectively, cause the RU to:
receive, from a distributed unit (DU), a control plane message including a section extension, the section extension including transmission timing information for an uplink user plane message; and
transmit, to the DU, the uplink user plane message based on the transmission timing information included in the section extension,
wherein the transmission timing information includes identifiers of a plurality of transmission symbols for symbols in which uplink data is received from a user equipment (UE).
